# EUROPEAN PATENT APPLICATION

(11) **EP 4 730 732 A1**
(43) Date of publication of application: **22.04.2026**
(21) Application number: 25201928.6
(22) Date of filing: 12.09.2025
(51) Int. Cl.: H04L 41/0631, H04L 41/142, H04L 41/16, H04L 41/0654, H04L 43/0817

(54) **NETWORK ANOMALY DETECTION**

(30) Priority: 18.10.2024 US 202463709023 P; 27.06.2025 US 202519253455
(71) Applicant: Juniper Networks, Inc., Sunnyvale, CA 94089-1206 (US)
(72) Inventor: CHENG, Jing, Sunnyvale, 94089 (US); WU, Xiaoying, Sunnyvale, 94089 (US); THOMAS, Jacob, Sunnyvale, 94089 (US)
(74) Representative: D Young & Co LLP

(57) **Abstract**

Techniques are described for identifying, by a network management system (NMS), a seasonal pattern of device counts collected at a site over time; predicting, by the NMS, device counts for a time window based on the seasonal pattern and device counts determined for one or more prior time windows; detecting, by the NMS, an anomaly during the time window based on a difference between actual device counts determined for the time window and the predicted device counts for the time window; and determining, by the NMS, a root cause of the anomaly at the site.

## Description

This application claims priority to U.S. Utility Application No. 19/253,455, filed June 27, 2025, which claims the benefit of U.S. Provisional Application No. 63/709,023, filed Oct. 18, 2024, the entire contents of which are incorporated herein by reference.

### TECHNICAL FIELD

The disclosure relates generally to computer networks and, more specifically, to monitoring and troubleshooting computer networks.

### BACKGROUND

Commercial premises or sites, such as offices, hospitals, airports, stadiums, or retail outlets, often install complex wireless network systems, including a network of wireless access points (APs), throughout the premises to provide wireless network services to one or more wireless client devices (or simply, "clients"). APs are physical, electronic devices that enable other devices to wirelessly connect to a wired network using various wireless networking protocols and technologies, such as wireless local area networking protocols conforming to one or more of the IEEE 802.11 standards (i.e., "WiFi"), Bluetooth / Bluetooth Low Energy (BLE), mesh networking protocols such as ZigBee or other wireless networking technologies. Many different types of wireless client devices, such as laptop computers, smartphones, tablets, wearable devices, appliances, and Internet of Things (IoT) devices, incorporate wireless communication technology and can be configured to connect to wireless access points when the device is in range of a compatible wireless access point in order to access a wired network. In the case of a client device running a cloud-based application, such as voice over Internet Protocol (VOIP) applications, streaming video applications, gaming applications, or video conference applications, data is exchanged during an application session from the client device through one or more APs and one or more wired network devices, e.g., switches, routers, and/or gateway devices, to reach the cloud-based application server.

### SUMMARY

Particular aspects are set out in the appended independent claims. Various optional embodiments are set out in the dependent claims.

In general, this disclosure describes one or more techniques for detecting network anomalies at a site using a multi-factor anomaly detection model. A network management system may detect anomalies at the site based on time-series network data indicating at least two feature values associated with corresponding features of a network site. For example, the network management system may collect time-series network data with feature values indicating a first feature of access point (AP) device counts of active AP devices determined to be reporting statistics at a site throughout various time windows. The network management system may collect time-series network data with feature values indicating a second feature of client device counts of active client devices connected to the AP devices at the site throughout the various time windows.

The network management system may identify a seasonal pattern associated with the at least two features that correspond to the collected time-series network data. The network management system may identify a seasonal pattern as a function of the at least two features of network data (e.g., y-axis) with respect to time (e.g., x-axis) that indicates a statistical behavior of the at least two features within a time window. For example, the network management system may graph the time-series network data collected within a time window (e.g., one day, one week, etc.) to identify a seasonal pattern indicating a regular pattern of feature metrics with a consistent, stable statistical behavior of feature values for the at least two features within the time window, a complex pattern of feature metrics with a consistent, stable statistical behavior of feature values for the at least two features within the time window, or a random pattern of feature metrics with an inconsistent statistical behavior of feature values for the at least two features within the time window.

In some examples, the network management system may select, based on the identified seasonal pattern, different flavors of a multi-feature anomaly detection model (e.g., a threshold anomaly detection model, a baseline anomaly detection model, a universal anomaly detection model applicable to two or more sites and/or a fine-tuned anomaly detection model applicable to a specific site) to optimize computational resources utilized during anomaly detection. For example, the network management system may maintain a first flavor of an anomaly detection model as a threshold model that may apply heuristics or rules to predict feature values based on expected value ranges. The network management system may maintain a second flavor of an anomaly detection model as a baseline model that may apply statistical mean and logical regression to predict features values. The baseline model may consume fewer computational resources (e.g., processing cycles, memory utilization, power utilization, etc.) than a deep learning model. The network management system may maintain a third flavor of the anomaly detection model as a fine-tuned machine learning model. In this example and in instances where the identified seasonal pattern indicates a stable and relatively regular pattern, the network management system may select the second flavor of the anomaly detection model to apply during anomaly detection to avoid consuming additional computational resources associated with executing the third flavor of the anomaly detection model. In instances where the identified seasonal pattern indicates a stable and relative complex pattern, the network management system may select the third flavor of the anomaly detection model to effectively detect potential anomalies.

The network management system may apply a selected anomaly detection model to predict feature values for features associated with the time-series network data. For example, the network management system may receive and output of the anomaly detection model as predicted data or pseudo-data indicating predicted feature values for the at least two features within a time window of collected feature values. The network management system may implement the anomaly detection model to generate a prediction of the at least two features within the time window that indicates expected feature values for the at least two features within the time window.

The network management system may detect an anomaly at a site associated with the network data including the at least two features based on the prediction of the feature values output by the selected anomaly detection model. For example, the network management system may compare actual feature values within network data collected during the time window to the predicted feature values output by the selected anomaly detection model to detect an anomaly at the site. The network management system may trigger root cause determination for the detected anomaly. The network management system may determine a root cause for the detected anomaly by performing root cause analysis based on the at least two features of the collected network data. For instance, the network management system may determine whether a root cause of anomalous client drops at a site are due to issues associated with individual sites (e.g., AP devices at the site) or a higher scope issue (e.g., switches, edge devices, or other organizational issues).

In some examples, based on the network management system determining that multiple sites of an organization are associated with a particular anomaly, the network management system may determine a scope of the root cause for the detected anomaly is an organization-level root cause that may require adjustment of network devices at affected sites of the organization. The network management system may generate a recommendation of the adjustments to mitigate potential organization-level root causes that may have contributed to a detected anomaly at multiple sites of the organization.

In one example, the disclosure is directed to a network management system (NMS) comprising memory and processing circuitry in communication with the memory and configured to identify a seasonal pattern of device counts collected at a site over time; predict device counts for a time window based on the seasonal pattern and device counts determined for one or more prior time windows; detect an anomaly during the time window based on a difference between actual device counts determined for the time window and the predicted device counts for the time window; and determine a root cause of the anomaly at the site.

In another example, the disclosure is directed to a method comprising identifying, by an NMS, a seasonal pattern of device counts collected at a site over time; predicting, by the NMS, device counts for a time window based on the seasonal pattern and device counts determined for one or more prior time windows; detecting, by the NMS, an anomaly during the time window based on a difference between actual device counts determined for the time window and the predicted device counts for the time window; and determining, by the NMS, a root cause of the anomaly at the site.

In another example, the disclosure is directed to computable readable storage media comprising instructions that, when executed by one or more programmable processors, cause the one or more programmable processors to identify a seasonal pattern of device counts collected at a site over time; predict device counts for a time window based on the seasonal pattern and device counts determined for one or more prior time windows; detect an anomaly during the time window based on a difference between actual device counts determined for the time window and the predicted device counts for the time window; and determine a root cause of the anomaly at the site.

In one example, the disclosure is directed to an NMS comprising memory and processing circuitry in communication with the memory and configured to monitor, during a training period, a real-time seasonal pattern for a plurality of features of network data collected at a site of a plurality of sites associated with an organization; based on the real-time season pattern at the site, assign the site to a pattern type of two or more pattern types, wherein the two or more pattern types include a random pattern type, a regular pattern type, and a complex pattern type; based on the pattern type of the site, assign an anomaly detection model of two or more anomaly detection models to the site, wherein the anomaly detection model is associated with the pattern type of the site; and detect an anomaly in the plurality of features of network data collected at the site using the assigned anomaly detection model for the site.

In another example, the disclosure is directed to a method comprising monitoring, by an NMS and during a training period, a real-time seasonal pattern for a plurality of features of network data collected at a site of a plurality of sites associated with an organization; based on the real-time season pattern at the site, assigning, by the NMS, the site to a pattern type of two or more pattern types, wherein the two or more pattern types include a random pattern type, a regular pattern type, and a complex pattern type; based on the pattern type of the site, assigning, by the NMS, an anomaly detection model of two or more anomaly detection models to the site, wherein the anomaly detection model is associated with the pattern type of the site; and detecting, by the NMS, an anomaly in the plurality of features of network data collected at the site using the assigned anomaly detection model for the site.

In another example, the disclosure is directed to computer readable storage media comprising instructions that, when executed by one or more programmable processors, cause the one or more programmable processors to monitor, during a training period, a real-time seasonal pattern for a plurality of features of network data collected at a site of a plurality of sites associated with an organization; based on the real-time season pattern at the site, assign the site to a pattern type of two or more pattern types, wherein the two or more pattern types include a random pattern type, a regular pattern type, and a complex pattern type; based on the pattern type of the site, assign an anomaly detection model of two or more anomaly detection models to the site, wherein the anomaly detection model is associated with the pattern type of the site; and detect an anomaly in the plurality of features of network data collected at the site using the assigned anomaly detection model for the site.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF DRAWINGS

FIG. 1A is a block diagram of an example network system including a network management system, in accordance with one or more techniques of the disclosure.
FIG. 1B is a block diagram illustrating further example details of the network system of FIG. 1A.
FIG. 2 is a block diagram of an example access point device, in accordance with one or more techniques of this disclosure.
FIG. 3 is a block diagram of an example network management system, in accordance with one or more techniques of the disclosure.
FIG. 4 is a block diagram of an example user equipment device, in accordance with one or more techniques of this disclosure.
FIG. 5 is a block diagram of an example network node, such as a router or switch, in accordance with one or more techniques of this disclosure.
FIG. 6 illustrates example features of network data collected within an example time window, in accordance with one or more techniques of this disclosure.
FIG. 7 illustrates an example comparison of actual feature values for features to predicted feature values for the features for anomaly detection, in accordance with one or more techniques of this disclosure.
FIG. 8 is a flow chart illustrating an example operation for detecting anomalies, in accordance with one or more techniques of this disclosure.
FIG. 9 is a flow chart illustrating an example operation for selecting an anomaly detection model for detecting anomalies, in accordance with one or more techniques of this disclosure.

### DETAILED DESCRIPTION

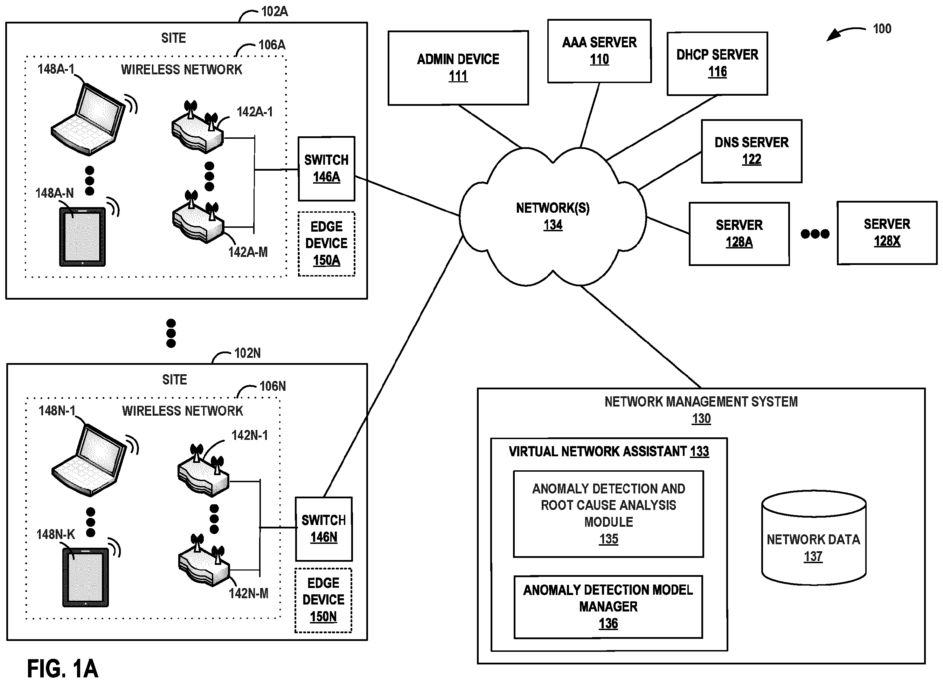

FIG. 1A is a block diagram of an example network system 100 including network management system (NMS) 130, in accordance with one or more techniques of this disclosure. Example network system 100 includes a plurality sites 102A-102N at which a network service provider manages one or more wireless networks 106A-106N, respectively. Although in FIG. 1A each site 102A-102N is shown as including a single wireless network 106A-106N, respectively, in some examples, each site 102A-102N may include multiple wireless networks, and the disclosure is not limited in this respect.

Each site 102A-102N includes a plurality of network access server (NAS) devices, such as access points (APs) 142, switches 146, or routers (not shown). For example, site 102A includes a plurality of APs 142A-1 through 142A-M. Similarly, site 102N includes a plurality of APs 142N-1 through 142N-M. Each AP 142 may be any type of wireless access point, including, but not limited to, a commercial or enterprise AP, a router, or any other device that is connected to a wired network and is capable of providing wireless network access to client devices within the site.

Each site 102A-102N also includes a plurality of client devices, otherwise known as user equipment devices (UEs), referred to generally as UEs or client devices 148, representing various wireless-enabled devices within each site. For example, a plurality of UEs 148A-1 through 148A-K are currently located at site 102A. Similarly, a plurality of UEs 148N-1 through 148N-K are currently located at site 102N. Each UE 148 may be any type of wireless client device, including, but not limited to, a mobile device such as a smart phone, tablet or laptop computer, a personal digital assistant (PDA), a wireless terminal, a smart watch, smart ring, or other wearable device. UEs 148 may also include wired client-side devices, e.g., IoT devices such as printers, security devices, environmental sensors, or any other device connected to the wired network and configured to communicate over one or more wireless networks 106.

In order to provide wireless network services to UEs 148 and/or communicate over the wireless networks 106, APs 142 and the other wired client-side devices at sites 102 are connected, either directly or indirectly, to one or more network devices (e.g., switches, routers, or the like) via physical cables, e.g., Ethernet cables. In the example of FIG. 1A, site 102A includes a switch 146A to which each of APs 142A-1 through 142A-M at site 102A are connected. Similarly, site 102N includes a switch 146N to which each of APs 142N-1 through 142N-M at site 102N are connected. Although illustrated in FIG. 1A as if each site 102 includes a single switch 146 and all APs 142 of the given site 102 are connected to the single switch 146, in other examples, each site 102 may include more or fewer switches and/or routers. In addition, the APs and the other wired client-side devices of the given site may be connected to two or more switches and/or routers. In addition, two or more switches at a site may be connected to each other and/or connected to two or more routers, e.g., via a mesh or partial mesh topology in a hub-and-spoke architecture. In some examples, interconnected switches and routers comprise wired local area networks (LANs) at sites 102 hosting wireless networks 106.

Example network system 100 also includes various networking components for providing networking services within the wired network including, as examples, an Authentication, Authorization and Accounting (AAA) server 110 for authenticating users and/or UEs 148, a Dynamic Host Configuration Protocol (DHCP) server 116 for dynamically assigning network addresses (e.g., IP addresses) to UEs 148 upon authentication, a Domain Name System (DNS) server 122 for resolving domain names into network addresses, a plurality of servers 128A-128X (collectively "servers 128") (e.g., web servers, databases servers, file servers and the like), and a network management system (NMS) 130. As shown in FIG. 1A, the various devices and systems of network 100 are coupled together via one or more network(s) 134, e.g., the Internet and/or an enterprise intranet.

In the example of FIG. 1A, NMS 130 is a cloud-based computing platform that manages wireless networks 106A-106N at one or more of sites 102A-102N. As further described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. In some examples, NMS 130 outputs notifications, such as alerts, alarms, graphical indicators on dashboards, log messages, text / SMS messages, email messages, and the like, and/or recommendations regarding wireless network issues to a site or network administrator ("admin") interacting with and/or operating admin device 111. Additionally, in some examples, NMS 130 operates in response to configuration input received from the administrator interacting with and/or operating admin device 111.

The administrator and admin device 111 may comprise IT personnel and an administrator computing device associated with one or more of sites 102. Admin device 111 may be implemented as any suitable device for presenting output and/or accepting user input. For instance, admin device 111 may include a display. Admin device 111 may be a computing system, such as a mobile or non-mobile computing device operated by a user and/or by the administrator. Admin device 111 may, for example, represent a workstation, a laptop or notebook computer, a desktop computer, a tablet computer, or any other computing device that may be operated by a user and/or present a user interface in accordance with one or more aspects of the present disclosure. Admin device 111 may be physically separate from and/or in a different location than NMS 130 such that admin device 111 may communicate with NMS 130 via network 134 or other means of communication.

In some examples, one or more of the NAS devices, e.g., APs 142, switches 146, or routers, may connect to edge devices 150A-150N via physical cables, e.g., Ethernet cables. Edge devices 150 comprise cloud-managed, wireless local area network (LAN) controllers. Each of edge devices 150 may comprise an on-premises device at a site 102 that is in communication with NMS 130 to extend certain microservices from NMS 130 to the on-premises NAS devices while using NMS 130 and its distributed software architecture for scalable and resilient operations, management, troubleshooting, and analytics.

Each one of the network devices of network system 100, e.g., servers 110, 116, 122 and/or 128, APs 142, UEs 148, switches 146, and any other servers or devices attached to or forming part of network system 100, may include a system log or an error log module wherein each one of these network devices records the status of the network device including normal operational status and error conditions. Throughout this disclosure, one or more of the network devices of network system 100, e.g., servers 110, 116, 122 and/or 128, APs 142, UEs 148, and switches 146, may be considered "third-party" network devices when owned by and/or associated with a different entity than NMS 130 such that NMS 130 does not receive, collect, or otherwise have access to the recorded status and other data of the third-party network devices. In some examples, edge devices 150 may provide a proxy through which the recorded status and other data of the third-party network devices may be reported to NMS 130.

In some examples, NMS 130 monitors network data 137, e.g., one or more service level expectation (SLE) metrics, received from wireless networks 106A-106N at each site 102A-102N, respectively, and manages network resources, such as APs 142 at each site, to deliver a high-quality wireless experience to end users, IoT devices and clients at the site. For example, NMS 130 may include a virtual network assistant (VNA) 133 that implements an event processing platform for providing real-time insights and simplified troubleshooting for IT operations, and that automatically takes corrective action or provides recommendations to proactively address wireless network issues. VNA 133 may, for example, include an event processing platform configured to process hundreds or thousands of concurrent streams of network data 137 from sensors and/or agents associated with APs 142 and/or nodes within network 134. For example, VNA 133 of NMS 130 may include an underlying analytics and network error identification engine and alerting system in accordance with various examples described herein. The underlying analytics engine of VNA 133 may apply historical data and models to the inbound event streams to compute assertions, such as identified anomalies or predicted occurrences of events constituting network error conditions. Further, VNA 133 may provide real-time alerting and reporting to notify a site or network administrator via admin device 111 of any predicted events, anomalies, trends, and may perform root cause analysis and automated or assisted error remediation. In some examples, VNA 133 of NMS 130 may apply machine learning techniques to identify the root cause of error conditions detected or predicted from the streams of network data 137. If the root cause may be automatically resolved, VNA 133 may invoke one or more corrective actions to correct the root cause of the error condition, thus automatically improving the underlying SLE metrics and also automatically improving the user experience.

Further example details of operations implemented by the VNA 133 of NMS 130 are described in U.S. Patent No. 9,832,082, issued November 28, 2017, and entitled "Monitoring Wireless Access Point Events," U.S. Publication No. US 2021/0306201, published September 30, 2021, and entitled "Network System Fault Resolution Using a Machine Learning Model," U.S. Patent No. 10,985,969, issued April 20, 2021, and entitled "Systems and Methods for a Virtual Network Assistant," U.S. Patent No. 10,958,585, issued March 23, 2021, and entitled "Methods and Apparatus for Facilitating Fault Detection and/or Predictive Fault Detection," U.S. Patent No. 10,958,537, issued March 23, 2021, and entitled "Method for Spatio-Temporal Modeling," and U.S. Patent No. 10,862,742, issued December 8, 2020, and entitled "Method for Conveying AP Error Codes Over BLE Advertisements," all of which are incorporated herein by reference in their entirety.

In operation, NMS 130 observes, collects and/or receives network data 137, which may take the form of time-series data extracted from messages, counters, and statistics, for example. In accordance with one specific implementation, a computing device is part of NMS 130. In accordance with other implementations, NMS 130 may comprise one or more computing devices, dedicated servers, virtual machines, containers, services, or other forms of environments for performing the techniques described herein. Similarly, computational resources and components implementing VNA 133 may be part of the NMS 130, may execute on other servers or execution environments, or may be distributed to nodes within network 134 (e.g., routers, switches, controllers, gateways, and the like).

In accordance with one or more techniques of this disclosure, NMS 130 is configured to detect network anomalies at a site. NMS 130 may detect anomalies at a site using an anomaly detection model that may be intelligently selected for the site to conserve computational resources associated with executing various versions of anomaly detection models stored in a repository of anomaly detection models (also referred to herein as "anomaly detection model repository" or "AD repository"). NMS 130 may provide the selected anomaly detection model at least two features stored at network data 137 that were collected within a time window (e.g., 8 hours, 1 day, 1 week, 1 month, etc.). NMS 130 may implement the selected anomaly detection model to output predicted feature values for the at least two features within the time window of collected network data. For example, NMS 130 may implement an anomaly detection model to predict feature values 1-hour in the future that follows 3-hours of collected network data. NMS 130 may detect an anomaly at a site of sites 102 based on a difference between actual, collected feature values of network data 137 collected within the time window and predicted feature values for the time window that is output by the anomaly detection model. NMS 130 may determine a root cause for the anomaly based on features of network data 137 collected at a site of sites 102 where the anomaly was detected. In some examples, NMS 130 may determine a scope of the root cause for the anomaly is an organizational issue based on a determination that multiple sites owned by an organization have similar anomalies that have been detected.

NMS 130, in the example of FIG. 1A, may include anomaly detection and root cause analysis module 135 (also referred to herein as "AD and RCA module 135") and anomaly detection model manager 136 (also referred to herein as "AD model manager 136"). In operation, AD and RCA module 135 may process multiple features of network data 137 collected within a time window to identify a seasonal pattern associated with the features measured within the time window. Features stored at network data 137 may include time-series data indicating metrics, statistics, or other messages reported by network devices of sites 102 that indicate particular behaviors of devices of sites 102 during particular time windows. For example, network data 137 may store a first feature of statistics reported by AP devices 142A indicating a number of active client devices 148A connected to AP devices 142A throughout various time windows. Network data 137 may store a second feature of a number of AP devices 142A reporting statistics, indicating a number of active or reporting AP devices 142A throughout the various time windows.

AD and RCA module 135 may process at least two features of network data 137 collected within a time window to identify a seasonal pattern for the at least two features. For example, AD and RCA module 135 may process a first set of feature values for a first feature indicating a number of active AP devices 142A at site 102A reporting statistics within a time window (e.g., three hours) and a second set of feature values for a second feature indicating a number of active client devices 148A at site 102A connected to AP devices 142A within the time window to identify a seasonal pattern for the first feature and the second feature within the time window. AD and RCA module 135 may process the first feature and second feature by stacking the first feature and the second feature. AD and RCA module 135 may stack the first feature and the second feature by aggregating time-series feature values for the first feature and the second feature collected within the time window. For example, AD and RCA module 135 may aggregate (e.g., take an average, mean, etc.) the first set of feature values and the second set of feature values into buckets of feature values for the first feature and the second feature that correspond to successive time intervals within the time window to identify a seasonal pattern of the first feature and the second feature within the time window.

AD and RCA module 135 may identify a seasonal pattern for the first feature and the second feature within the time window by generating a function indicating a behavior of the aggregated feature values for the first feature and the second feature. For example, AD and RCA module 135 may create a function based on the aggregated feature values, collected at the site up to a current time, indicating a distribution following a regular seasonal pattern of the two features associated with a simple, consistent statistical pattern (e.g., a normal distribution, t-distribution, constant distribution, linear distribution, etc.). In another example, AD and RCA module 135 may create a function based on the aggregated feature values, collected at the site up to a current time, indicating a distribution following a complex seasonal pattern of the two features associated with a complex, consistent statistical pattern (e.g., fractal patterns, Markov chains, clustered spatial distributions, etc.). In another example, AD and RCA module 135 may create a function based on the aggregated feature values, collected at the site up to a current time, indicating distribution following a seemingly random seasonal pattern of the two features associated with an inconsistent statistical pattern (e.g., random or pseudo-random behavior of features). AD and RCA module 135 may send, to AD model manager 136, an indication of the seasonal pattern (e.g., the function) for at least two features of network data 137 within a time window.

AD model manager 136 may select an anomaly detection model from a repository of anomaly detection models based on the indication of the seasonal pattern received from AD and RCA module 135. AD model manager 136 may select an anomaly detection model from the repository of anomaly detection models to optimize utilization of computational resources associated with performing anomaly detection. AD model manager 136 may maintain a repository of anomaly detection models that include different versions or flavors of anomaly detection models with varying complexity (e.g., varying number of parameters for an anomaly detection algorithm, varying number of neural network layers, varying weights or biases in a machine learning model, etc.). AD model manager 136 may maintain a repository of anomaly detection models that includes a mapping of anomaly detection model versions to clusters corresponding to pattern types of identified seasonal patterns of the at least two features of network data 137. In this way, AD model manager 136 may develop and deploy anomaly detection models that may adapt to various pattern types of features in network data 137 that are specific to network behavior at sites 102.

AD model manager 136 may create the different anomaly detection model versions of the anomaly detection model repository based on historical network data stored at network data 137. In some examples, AD model manager 136 may initially create a threshold anomaly detection model that may be configured to predict feature values using heuristic or rule-based approaches. AD model manager 136 may, based on collecting network data 137, generate a baseline anomaly detection model with a first set of historical network data of network data 137. For example, AD model manager 136 may generate a baseline anomaly detection model as a long short-term memory (LSTM) model trained, based on the first set of historical network data collected during initialization of the techniques described herein, to predict feature values for sites 102 that have features identified with a seasonal pattern associated with a regular pattern type. AD model manager 136 select the baseline anomaly detection model instead of the threshold anomaly detection model to more accurately predict feature values for anomaly detection at site 102A, for example, in instances where site 102A is assigned to a seasonal pattern cluster associated with a regular pattern type. AD model manager 136 may continue to select the threshold anomaly detection model in instances where a real-time seasonal pattern of features observed at site 102A is identified to be a random pattern type.

As AD and RCA module 135 collects subsequent historical network data, AD and RCA module 135 may identify more complex seasonal patterns of features of sites 102. AD and RCA module 135 may send AD model manager 136 the historical network data and corresponding indications of the complex pattern type. AD model manager 136 may create, based on the indications of the complex pattern type and corresponding historical network data of network data 137, a universal anomaly detection model as a machine learning model (e.g., a deep learning neural network) configured to predict feature values for two or more sites of sites 102 that are observed as having features following a seasonal pattern associated with the complex pattern type. For instance, AD model manager 136 may create a universal anomaly detection model as a neural network trained to predict feature values based on historical network data identified to be associated with a complex pattern type. AD model manager 136 may select the universal anomaly detection model for two or more sites of sites 102 that have features identified as having a seasonal pattern associated with the complex pattern type. AD model manager 136 may train the universal anomaly detection model based on historical network data of network data 137 associated with features that were observed to have the particular complex pattern type. AD model manager 136 may select the universal anomaly detection model in instances where AD model manager 136 receives, from AD and RCA module 135, an indication of a seasonal pattern that corresponds to the complex pattern type. In instances where AD model manager 136 receives an indication of a seasonal pattern associated with a regular pattern type, AD model manager 136 may select the baseline anomaly detection model to conserve computational resources (e.g., processing cycles, memory usage, power consumption, etc.) associated with executing the more complex universal anomaly detection model.

In some examples, AD model manager 136 may fine-tune a universal anomaly detection model to create a different version of an anomaly detection model specific to a site of sites 102. As AD model manager 136 receives subsequent historical network data for a site of sites 102, AD model manager 136 may create a retrained and/or fine-tuned version of the universal model (e.g., as a transformer model) that is adapted to predict feature values for features associated with complex seasonal patterns observed at the site of sites 102. For example, AD model manager 136 may receive, from AD and RCA module 135, an indication of a complex seasonal pattern of features that has been observed at site 102A. AD model manager 136 may fine-tune the universal anomaly detection model to predict feature values for site 102A based on historical network data of network data 137 associated with features having the complex seasonal pattern specific to site 102A. AD model manager 136 may select the fine-tuned anomaly detection model responsive to receiving an indication that a recent set of network data for site 102A has features associated with the complex seasonal pattern specific to site 102A. AD model manager 136 may select the universal anomaly detection model in instances AD model manager 136 receives an indication of a seasonal pattern for features observed at site 102A that is associated with a shared pattern type that has been observed at more than one site of sites 102. In this way, AD model manager 136 may conserve computational resources associated with executing the fine-tuned anomaly detection model in instances where a regular or shared seasonal pattern of features are observed at site 102A.

AD model manager 136 may generate seasonal pattern clusters of seasonal patterns that each indicate varying pattern types for features of sites 102 collected for particular time windows. AD model manager 136 may map a seasonal pattern cluster identifying one or more pattern types of at least two features of sites 102 to a corresponding version of an anomaly detection model of the anomaly detection model repository. For example, AD model manager 136 may map a seasonal pattern cluster for seasonal patterns associated with a complex pattern type to a version of an anomaly detection model that has been retrained and/or fine-tuned to predict feature values given features exhibiting the complex pattern type within a time window. AD model manager 136 may maintain seasonal pattern cluster to anomaly detection model mappings in the AD model repository.

During the inference phase of multi-feature anomaly detection, AD model manager 136 may receive, from AD and RCA module 135, an indication of a real-time seasonal pattern of real-time feature data of network data 137 collected at a site up to a current time (e.g., most recent time-series data network data 137 indicating at least two features within a time window). AD model manager 136 may determine a seasonal pattern cluster of the AD model repository based on the indication of the real-time seasonal pattern received from AD and RCA module 135. For example, AD model manager 136 may assign a site to a seasonal pattern cluster based on the site sending real-time network data exhibiting a real-time seasonal pattern associated with a pattern type of the seasonal pattern cluster of the AD model repository. AD model manager 136 may, for example, determine the site exhibits the pattern type associated with the seasonal pattern cluster by comparing the function of the real-time seasonal pattern to a function associated with the pattern type (e.g., comparing phase shift or transformation, periodicity and frequency, an/or graphical shape or behavior, performing a derivative analysis, comparing Fourier transformations or representative complex functions, etc.). AD model manager 136 may assign the site associated with the real-time seasonal pattern to the seasonal pattern cluster based on determining the function for the real-time seasonal pattern is similar (e.g., by a threshold amount) to the function for the pattern type of the seasonal pattern cluster. AD model manager 136 may select a version of an anomaly detection model that is mapped to the seasonal pattern cluster assigned to the site. AD and RCA module 135 may implement the selected version of the anomaly detection model for detecting anomalies at the site until AD model manager 136 refreshes the seasonal pattern cluster assigned to the site. In other words, after the training period, AD model manager 136 may statically maintain the assignment of the pattern type and associated anomaly detection model to a site AD manager 136 may reevaluate and/or reassign a site to a seasonal pattern cluster in periodic intervals (e.g., every week, month, etc.), rather than iteratively. In other words, during a training period, AD model manager may change the pattern type and associated anomaly detection model assigned to a site over time based on changes in monitored real-time seasonal patterns at the site. In this way, AD model manager 136 may select an anomaly detection model that is specific to a pattern of observed real-time network data behavior of the at least two features collected at a particular site of sites 102 in a way that considers computational resources utilized during anomaly detection.

AD model manager 136 may send AD and RCA module 135 an instance of the selected anomaly detection model. AD and RCA module 135 may execute the instance of the anomaly detection model to predict features values for the at least two features within a time window that corresponds to the real-time, collected network data of network data 137. In other words, AD and RCA module 135 may execute the instance of the anomaly detection model to generate a prediction of feature values that indicate expected feature values within a time window of observed feature values. For example, in instances where the features include device counts collected at site 102A over time (e.g., number of active client devices 148A and number of active AP devices 142A reporting statistics to NMS 130), AD and RCA module 135 may execute the instance of the selected anomaly detection model to predict device counts for a time window (e.g., the last 4 hours) based on the identified seasonal pattern of the features at site 102A.

AD and RCA module 135 may detect an anomaly based on actual feature values of network data 137 collected within the time window of observed features and the prediction of feature values within the time window. For instance, AD and RCA module 135 may compare the actual feature values of network data 137 collected within the time window to the predicted or expected feature values output by the selected anomaly detection model. AD and RCA module 135 may, based on the comparison, determine a difference in the actual feature values and the predicted feature values as an anomaly at a site with respect to the observed features. For example, AD and RCA module 135 may determine an anomaly for site 102A as a difference (e.g., two standard deviations) between actual feature values of device counts (e.g., active client devices 148A at site 102A connected to AP devices 142A and active AP devices 142A reporting statistics to NMS 130) and the predicted feature values for the device counts output by the selected anomaly detection model.

AD and RCA module 135 may determine a root cause of the detected anomaly for the site. AD and RCA module 135 may determine the root cause of the detected anomaly based on the actual feature values for the at least two features stored at network data 137. For example, AD and RCA module 135 may determine a root cause of the anomaly for the features of device counts indicating active client devices 148A and AP devices 142A at site 102A is associated with the second feature of active AP devices 142A at site 102A based on a difference in actual feature values of the device counts and predicted features values of the device counts. AD and RCA module 135 may generate a recommendation to mitigate or resolve the determined root cause. AD and RCA module 135 may output the recommendation to admin device 111, for example.

In some examples, AD and RCA module 135 may determine a scope of a particular anomaly. For example, AD and RCA module 135 may determine an anomaly at site 102A and determine the same anomaly at site 102N. Based on AD and RCA module 135 detecting the anomaly at site 102A and site 102N, AD and RCA module 135 may determine the scope of the root cause of the anomaly may be associated with an organizational issue of an organization that owns site 102A and site 102N. AD and RCA module 135 may generate a recommendation to mitigate the organizational issue. For example, AD and RCA module 135 may generate a recommendation indicating suggestions for modifying or reconfiguring APs 142, switches 146, etc. of sites 102A, 102N to mitigate the anomaly of client drops. AD and RCA module 135 may output the recommendation to admin device 111. For example, AD and RCA module 135 may output the recommendation as a notification that is output by an application executing at admin device 111.

The techniques of this disclosure provide one or more technical advantages and practical applications. For example, the techniques enable real-time or near-real time detection of feature anomalies that are specific to a network site. NMS 130 may process multi-variate, time-series network data to detect anomalies associated with features indicated in the network data (e.g., client device counts, AP device counts, a combination of client device counts and AP device counts, etc.). NMS 130 may develop and maintain various versions of anomaly detection models that may be trained to effectively predict feature values that are identified as having various seasonal patterns. NMS 130 may develop versions of anomaly detection models that may be specifically trained and designed to predict feature values for features that are observed at a particular site. In this way, NMS 130 may detect anomalies for network data features of a site using feature value predictions generated by an anomaly detection model that has been specifically trained to predict feature values for the site. NMS 130 may intelligently select which version of an anomaly detection model to execute for anomaly detection. By NMS 130 executing baseline anomaly detection models for features identified as having a stable, regular seasonal pattern, NMS 130 may conserve computational resources (e.g., processing cycles, memory usage, power consumption, etc.) associated with executing complex anomaly detection models (e.g., fine-tuned or retrained anomaly detection models) for feature value prediction. In general, NMS 130 may detect anomalies in real-time or near-real time to determine a root cause and generate a recommendation to resolve potential network issues associated with the detected anomaly.

Although the techniques of the present disclosure are described in this example as performed by NMS 130, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 130, or may be distributed throughout network 100, and may or may not form a part of NMS 130.

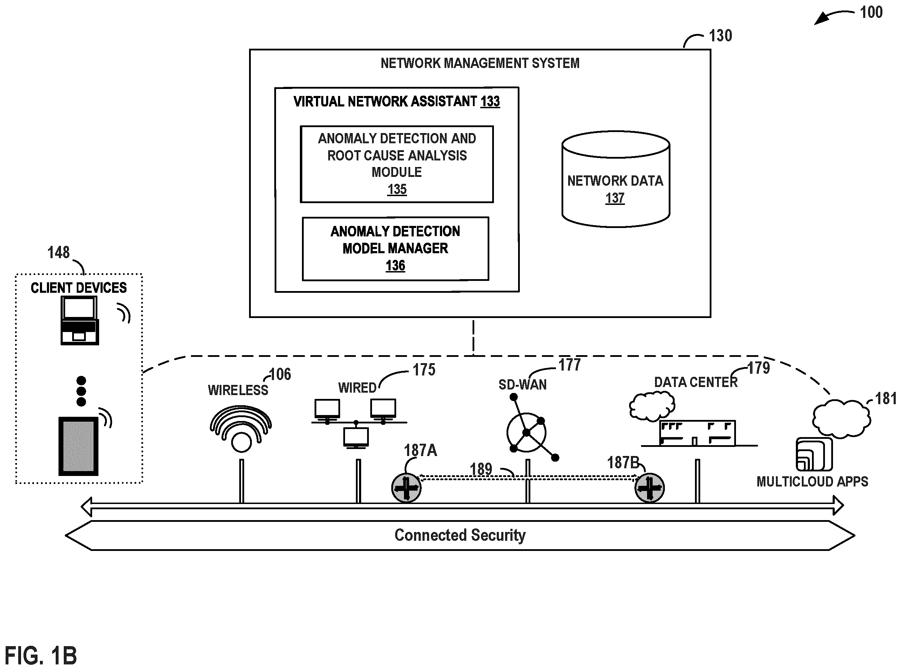

FIG. 1B is a block diagram illustrating further example details of the network system of FIG. 1A. In this example, FIG. 1B illustrates NMS 130 configured to operate according to an artificial intelligence / machine-learning-based computing platform providing comprehensive automation, insight, and assurance (WiFi Assurance, Wired Assurance and WAN assurance) spanning from "client," e.g., user devices 148 connected to wireless network 106 and wired LAN 175 (far left of FIG. 1B), to "cloud," e.g., cloud-based application services 181 that may be hosted by computing resources within data centers 179 (far right of FIG. 1B).

As described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. For example, network management system 130 may be configured to proactively monitor and adaptively configure network 100 so as to provide self-driving capabilities. Moreover, VNA 133 includes a natural language processing engine to provide AI-driven support and troubleshooting, anomaly detection, AI-driven location services, and AI-driven radio frequency (RF) optimization with reinforcement learning.

As illustrated in the example of FIG. 1B, AI-driven NMS 130 also provides configuration management, monitoring and automated oversight of software defined wide-area network (SD-WAN) 177, which operates as an intermediate network communicatively coupling wireless networks 106 and wired LANs 175 to data centers 179 and application services 181. In general, SD-WAN 177 provides seamless, secure, traffic-engineered connectivity between "spoke" routers 187A of wired networks 175 hosting wireless networks 106, such as branch or campus networks, to "hub" routers 187B further up the cloud stack toward cloud-based application services 181. SD-WAN 177 often operates and manages an overlay network on an underlying physical Wide-Area Network (WAN), which provides connectivity to geographically separate customer networks. In other words, SD-WAN 177 extends Software-Defined Networking (SDN) capabilities to a WAN and allows network(s) to decouple underlying physical network infrastructure from virtualized network infrastructure and applications such that the networks may be configured and managed in a flexible and scalable manner.

In some examples, underlying routers of SD-WAN 177 may implement a stateful, session-based routing scheme in which the routers 187A, 187B dynamically modify contents of original packet headers sourced by client devices 148 to steer traffic along selected paths, e.g., path 189, toward application services 181 without requiring use of tunnels and/or additional labels. In this way, routers 187A, 187B may be more efficient and scalable for large networks since the use of tunnel-less, session-based routing may enable routers 187A, 187B to achieve considerable network resources by obviating the need to perform encapsulation and decapsulation at tunnel endpoints. Moreover, in some examples, each router 187A, 187B may independently perform path selection and traffic engineering to control packet flows associated with each session without requiring use of a centralized SDN controller for path selection and label distribution. In some examples, routers 187A, 187B implement session-based routing as Secure Vector Routing (SVR), provided by Juniper Networks, Inc.

Additional information with respect to session-based routing and SVR is described in U.S. Patent No. 9,729,439, entitled "COMPUTER NETWORK PACKET FLOW CONTROLLER," and issued on August 8, 2017; U.S. Patent No. 9,729,682, entitled "NETWORK DEVICE AND METHOD FOR PROCESSING A SESSION USING A PACKET SIGNATURE," and issued on August 8, 2017; U.S. Patent No. 9,762,485, entitled "NETWORK PACKET FLOW CONTROLLER WITH EXTENDED SESSION MANAGEMENT," and issued on September 12, 2017; U.S. Patent No. 9,871,748, entitled "ROUTER WITH OPTIMIZED STATISTICAL FUNCTIONALITY," and issued on January 16, 2018; U.S. Patent No. 9,985,883, entitled "NAME-BASED ROUTING SYSTEM AND METHOD," and issued on May 29, 2018; U.S. Patent No. 10,200,264, entitled "LINK STATUS MONITORING BASED ON PACKET LOSS DETECTION," and issued on February 5, 2019; U.S. Patent No. 10,277,506, entitled "STATEFUL LOAD BALANCING IN A STATELESS NETWORK," and issued on April 30, 2019; U.S. Patent No. 10,432,522, entitled "NETWORK PACKET FLOW CONTROLLER WITH EXTENDED SESSION MANAGEMENT," and issued on October 1, 2019; and U.S. Patent No. 11,075,824, entitled "IN-LINE PERFORMANCE MONITORING," and issued on July 27, 2021, the entire content of each of which is incorporated herein by reference in its entirety.

In some examples, AI-driven NMS 130 may enable intent-based configuration and management of network system 100, including enabling construction, presentation, and execution of intent-driven workflows for configuring and managing devices associated with wireless networks 106, wired LAN networks 175, and /or SD-WAN 177. For example, declarative requirements express a desired configuration of network components without specifying an exact native device configuration and control flow. By utilizing declarative requirements, what should be accomplished may be specified rather than how it should be accomplished. Declarative requirements may be contrasted with imperative instructions that describe the exact device configuration syntax and control flow to achieve the configuration. By utilizing declarative requirements rather than imperative instructions, a user and/or user system is relieved of the burden of determining the exact device configurations required to achieve a desired result of the user/system. For example, it is often difficult and burdensome to specify and manage exact imperative instructions to configure each device of a network when various different types of devices from different vendors are utilized. The types and kinds of devices of the network may dynamically change as new devices are added and device failures occur. Managing various different types of devices from different vendors with different configuration protocols, syntax, and software versions to configure a cohesive network of devices is often difficult to achieve. Thus, by only requiring a user/system to specify declarative requirements that specify a desired result applicable across various different types of devices, management and configuration of the network devices becomes more efficient. Further example details and techniques of an intent-based network management system are described in U.S. Patent No. 10,756,983, entitled "Intent-based Analytics," and U.S. Patent No. 10,992,543, entitled "Automatically generating an intent-based network model of an existing computer network," each of which is hereby incorporated by reference.

In accordance with the techniques described in this disclosure, NMS 130 may detect an anomaly at a network site. AD and RCA module 135 of NMS 130 may detect an anomaly during a time window of observed features by executing an instance of an anomaly detection model received from AD model manager 136 of NMS 130. AD model manager 136 may select a version of an anomaly detection model to send to AD and RCA module 135 based on an identified seasonal pattern of feature data of network data 137 collected within a time window (e.g., network data collected at a site up to a current time). For example, AD model manager 136 may select a baseline anomaly detection model based on the identified seasonal pattern being associated with a regular pattern type. In another example, AD model manager 136 may select a fine-tuned anomaly detection model trained to predict feature values for a particular site based on the identified seasonal pattern being associated with a complex pattern type. In another example, AD model manager 136 may select a threshold anomaly detection model based on the identified seasonal pattern being associated with a random pattern type. AD and RCA module 135 may detect an anomaly observed at a site based on a difference of predicted feature values within a time window that was output by the instance of the anomaly detection model and actual feature values of network data 137 collected within the time window.

In one implementation, AD and RCA module 135 may identify a seasonal pattern of device counts collected at site 102A over time. For example, AD and RCA module 135 may process time-series data of network data 137 associated with site 102A to determine a number of active client devices 148A over a week and determine a number of AP devices 142A reporting statistics associated with the active client devices 148 over the week. AD and RCA module 135 may identify a seasonal pattern of the device counts of active client devices 148A and active AP devices 142A throughout the week as a real-time seasonal pattern. AD and RCA module 135 may send AD model manager 136 an indication of the seasonal pattern of the device counts within the week.

AD model manager 136 may assign site 102A to a pattern type of two or more pattern types that include at least a random pattern type, a regular pattern type, and a complex pattern type. AD model manager 136 may maintain seasonal pattern clusters associated with a pattern type of the two or more pattern types. For example, AD model manager 136 may maintain a first seasonal pattern cluster for the random pattern type, a second seasonal pattern cluster for the regular pattern type, and a third seasonal pattern cluster for the complex pattern type. AD model manager 136 may develop anomaly detection models for predicting feature values for features associated with each of the pattern types. For example, AD model manager 136 may develop a first anomaly detection model as a threshold anomaly detection model for the random pattern type seasonal pattern cluster, a second anomaly detection model as a baseline anomaly detection model for the regular pattern type seasonal pattern cluster, and a third anomaly detection model as a fine-tuned anomaly detection for the complex pattern type seasonal pattern cluster. As AD model manager 136 collects additional network data for sites 102, AD model manager may create additional versions of anomaly detection models for additional pattern types. For example, AD model manager 136 may create a universal anomaly detection model for a seasonal pattern with a particular pattern type that is shared between at least two sites of sites 102. In this way, AD model manager 136 may maintain versions of anomaly detection models of varying complexity that consume varying amounts of computational resources when executed. AD model manager 136 may select a version of an anomaly detection model based on a pattern type assigned to a site according to the identified seasonal pattern received from AD and RCA module 135.

AD and RCA module 135 may execute an instance of a selected anomaly detection model to predict device counts for a time window based on the seasonal pattern and device counts determined for one or more prior time window. For example, AD and RCA module 135 may predict the number of AP devices 142A and number of client devices 148A at site 102A within a time window (e.g., 1 week) based on the seasonal pattern and device counts determined for one or more prior time windows (e.g., device counts indicated in network data collected within previous 1-week time windows). AD and RCA module 135 may detect an anomaly at site 102 during the time window based on a difference between actual device counts determined for the time window and the predicted device counts for the time window. For example, AD and RCA module may compare actual device counts of active client devices 148A and active AP devices 142A of site 102A indicated in network data 137 and within the 1 week time window to the predicted device counts during the 1 week time window that was output by the selected anomaly detection model.

AD and RCA module 135 may determine a root cause for the detected anomaly. For example, AD and RCA module 135 may analyze feature data of network data 137 to identify a root cause for the anomaly. AD and RCA module 135 may determine whether more than one site experienced the anomaly. Based on AD and RCA module 135 detecting an anomaly at more than one site owned by an organization, AD and RCA module 135 may determine the scope of the root cause of the anomaly is an organizational issue. AD and RCA module 135 may generate a recommendation of network topology adjustments or network configurations that may mitigate and/or resolve the root cause. AD and RCA module 135 may output the recommendation to an administrator of the site associated with the anomaly.

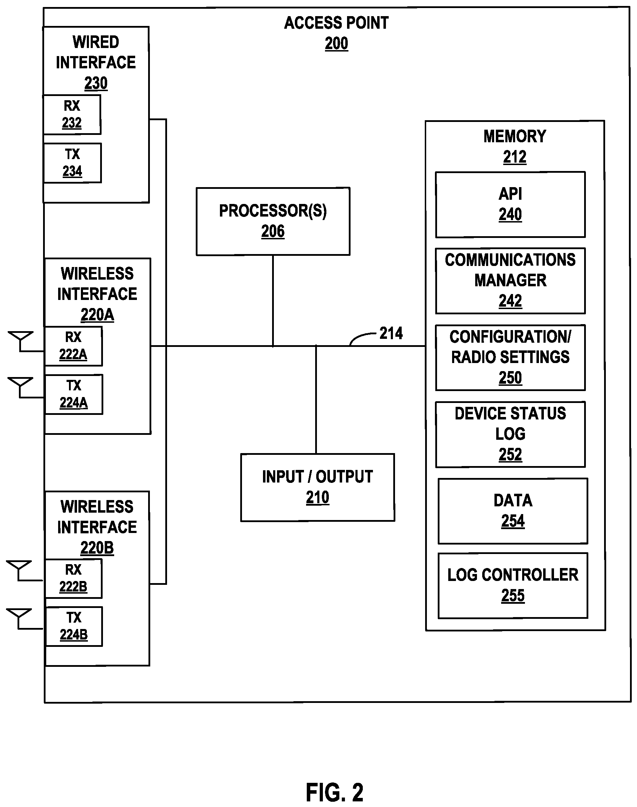

FIG. 2 is a block diagram of an example access point (AP) device 200, in accordance with one or more techniques of this disclosure. Example access point 200 shown in FIG. 2 may be used to implement any of APs 142 as shown and described herein with respect to FIG. 1A. Access point 200 may comprise, for example, a Wi-Fi, Bluetooth and/or Bluetooth Low Energy (BLE) base station or any other type of wireless access point.

In the example of FIG. 2, access point 200 includes a wired interface 230, wireless interfaces 220A-220B one or more processor(s) 206, memory 212, and input/output 210, coupled together via a bus 214 over which the various elements may exchange data and information. Wired interface 230 represents a physical network interface and includes a receiver 232 and a transmitter 234 for sending and receiving network communications, e.g., packets. Wired interface 230 couples, either directly or indirectly, access point 200 to a wired network device, such as one of switches 146 of FIG. 1A, within the wired network via a cable, such as an Ethernet cable.

First and second wireless interfaces 220A and 220B represent wireless network interfaces and include receivers 222A and 222B, respectively, each including a receive antenna via which access point 200 may receive wireless signals from wireless communications devices, such as UEs 148 of FIG. 1A. First and second wireless interfaces 220A and 220B further include transmitters 224A and 224B, respectively, each including transmit antennas via which access point 200 may transmit wireless signals to wireless communications devices, such as UEs 148 of FIG. 1A. In some examples, first wireless interface 220A may include a Wi-Fi 802.11 interface (e.g., 2.4 GHz and/or 5 GHz) and second wireless interface 220B may include a Bluetooth interface and/or a Bluetooth Low Energy (BLE) interface.

Processor(s) 206 are programmable hardware-based processors configured to execute software instructions, such as those used to define a software or computer program, stored to a computer-readable storage medium (such as memory 212), such as non-transitory computer-readable mediums including a storage device (e.g., a disk drive, or an optical drive) or a memory (such as Flash memory or RAM) or any other type of volatile or non-volatile memory, that stores instructions to cause the one or more processors 206 to perform the techniques described
herein. Such software instructions may also or alternatively be received by the processor(s) 206 for execution by way of a computer readable transmission medium (such as wired interface 230, wireless interface 220A, 220B and/or bus 214).

Memory 212 includes one or more devices configured to store programming modules and/or data associated with operation of access point 200. For example, memory 212 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the one or more processor(s) 206 to perform the techniques described herein.

In this example, memory 212 stores executable software including an application programming interface (API) 240, a communications manager 242, configuration settings 250, a device status log 252, data storage 254, and log controller 255. Device status log 252 includes a list of events specific to access point 200. The events may include a log of both normal events and error events such as, for example, memory status, reboot or restart events, crash events, cloud disconnect with self-recovery events, low link speed or link speed flapping events, Ethernet port status, Ethernet interface packet errors, upgrade failure events, firmware upgrade events, configuration changes, etc., as well as a time and date stamp for each event. Log controller 255 determines a logging level for the device based on instructions from NMS 130. Data 254 may store any data used and/or generated by access point 200, including data collected from UEs 148, such as data used to calculate one or more SLE metrics, that is transmitted by access point 200 for cloud-based management of wireless networks 106A by NMS 130.

Input/output (I/O) 210 represents physical hardware components that enable interaction with a user, such as buttons, a display, and the like. Although not shown, memory 212 typically stores executable software for controlling a user interface with respect to input received via I/O 210. Communications manager 242 includes program code that, when executed by processor(s) 206, allow access point 200 to communicate with UEs 148 and/or network(s) 134 via any of interface(s) 230 and/or 220A-220C. Configuration settings 250 include any device settings for access point 200 such as radio settings for each of wireless interface(s) 220A-220C. These settings may be configured manually or may be remotely monitored and managed by NMS 130 to optimize wireless network performance on a periodic (e.g., hourly or daily) basis.

As described herein, AP device 200 may measure and report network data from status log 252 to NMS 130. The network data may comprise device counts (e.g., a number of client devices connected to AP device 200), event data, telemetry data, and/or other SLE-related data. The network data may include various parameters indicative of the performance and/or status of the wireless network. The parameters may be measured and/or determined by one or more of the UE devices and/or by one or more of the APs in a wireless network. NMS 130 may determine one or more SLE metrics based on the SLE-related data received from the APs in the wireless network and store the SLE metrics as network data 137 (FIG. 1A).

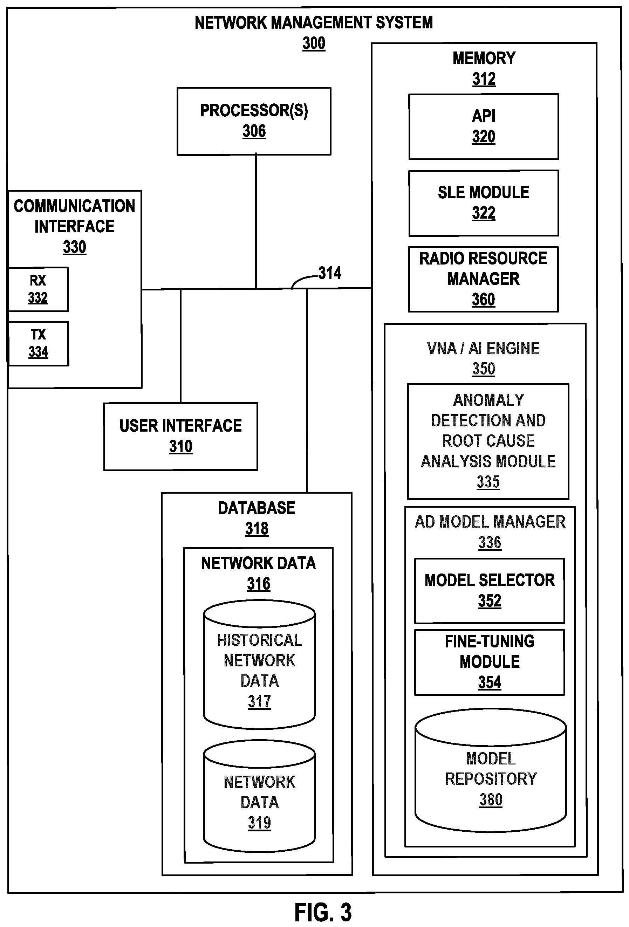

FIG. 3 is a block diagram of an example network management system (NMS) 300, in accordance with one or more techniques of the disclosure. NMS 300 may be used to implement, for example, NMS 130 in FIGS. 1A-1B. In such examples, NMS 300 is responsible for monitoring and management of one or more wireless networks 106A-106N at sites 102A-102N, respectively.

NMS 300 includes a communications interface 330, one or more processor(s) 306, a user interface 310, a memory 312, and a database 318. The various elements are coupled together via a bus 314 over which the various elements may exchange data and information. In some examples, NMS 300 receives data from one or more of client devices 148, APs 142, switches 146 and other network nodes within network 134, e.g., routers 187 of FIG. 1B, which may be used to calculate one or more SLE metrics and/or update network data 316 in database 318. NMS 300 analyzes this data for cloud-based management of wireless networks 106A-106N. In some examples, NMS 300 may be part of another server shown in FIG. 1A or a part of any other server.

Processor(s) 306 execute software instructions, such as those used to define a software or computer program, stored to a computer-readable storage medium (such as memory 312), such as non-transitory computer-readable mediums including a storage device (e.g., a disk drive, or an optical drive) or a memory (such as Flash memory or RAM) or any other type of volatile or non-volatile memory, that stores instructions to cause the one or more processors 306 to perform the techniques described herein. Such software instructions may also or alternatively be received by the processor(s) 306 for execution by way of a computer readable transmission medium (such as communication interface 330, and/or bus 314).

Communications interface 330 may include, for example, an Ethernet interface. Communications interface 330 couples NMS 300 to a network and/or the Internet, such as any of network(s) 134 as shown in FIG. 1A, and/or any local area networks. Communications interface 330 includes a receiver 332 and a transmitter 334 by which NMS 300 receives/transmits data and information to/from any of client devices 148, APs 142, switches 146, servers 110, 116, 122, 128 and/or any other network nodes, devices, or systems forming part of network system 100 such as shown in FIG. 1A. In some scenarios described herein in which network system 100 includes "third-party" network devices that are owned and/or associated with different entities than NMS 300, NMS 300 does not receive, collect, or otherwise have access to network data from the third-party network devices.

The data and information received by NMS 300 may include, for example, telemetry data, SLE-related data, or event data received from one or more of client device APs 148, APs 142, switches 146, or other network nodes, e.g., routers 187 of FIG. 1B, used by NMS 300 to remotely monitor the performance of wireless networks 106A-106N and application sessions from client device to cloud-based application server. NMS 300 may further transmit data via communications interface 330 to any of network devices such as client devices 148, APs 142, switches 146, other network nodes within network 134, admin device 111 to remotely manage wireless networks 106A-106N and portions of the wired network.

Memory 312 includes one or more devices configured to store programming modules and/or data associated with operation of NMS 300. For example, memory 312 may include a computer-readable storage medium, such as a non-transitory computer-readable medium including a storage device (e.g., a disk drive, or an optical drive) or a memory (such as Flash memory or RAM) or any other type of volatile or non-volatile memory, that stores instructions to cause the one or more processor(s) 306 to perform the techniques described herein.

In this example, memory 312 includes an API 320, an SLE module 322, a virtual network assistant (VNA)/AI engine 350, and a radio resource management (RRM) engine 360. In accordance with the disclosed techniques, VNA/AI engine 350 includes anomaly detection and root cause analysis module 335 (also referred to herein as "AD and RCA module 335") and anomaly detection (AD) model manager 336. AD and RCA module 335 and AD model manager 336 of FIG. 3 may be example or alternative implementations of AD and RCA module 135 and AD model manager 136 of FIG. 1, respectively. In the example of FIG. 3, AD model manager 336 may include model selector 352, fine-tuning module 354, and model repository 380. Model selector 352 may include computer readable instructions for selecting an anomaly detection model to be executed by AD and RCA module 335 during anomaly detection according to the techniques described herein. Fine-tuning module 354 may include computer readable instructions for retraining and fine-tuning versions of anomaly detection models executed by AD and RCA module 335 during anomaly detection according to the techniques described herein. Model repository 380 may include a storage device configured to store versions of anomaly detection models executed by AD and RCA module 335 during anomaly detection according to the techniques described herein. Model repository 380 may store mappings of anomaly detection model versions to seasonal pattern clusters that model selector 352 may utilize to select a version of an anomaly detection model for anomaly detection. NMS 300 may also include any other programmed modules, software engines and/or interfaces configured for remote monitoring and management of wireless networks 106A-106N and portions of the wired network, including remote monitoring and management of any of APs 142/200, switches 146, or other network devices, e.g., routers 187 of FIG. 1B.

SLE module 322 enables set up and tracking of thresholds for SLE metrics for each network 106A-106N. SLE module 322 further analyzes SLE-related data collected by APs, such as any of APs 142 from UEs in each wireless network 106A-106N. For example, APs 142A-1through142A-N collect SLE-related data from UEs 148A-1through 148A-N currently connected to wireless network 106A. This data is transmitted to NMS 300, which executes by SLE module 322 to determine one or more SLE metrics for each UE 148A-1 through 148A-N currently connected to wireless network 106A. This data, in addition to any network data collected by one or more APs 142A-1 through 142A-N in wireless network 106A, is transmitted to NMS 300 and stored as, for example, network data 316 in database 318. In the example of FIG. 3, network data 316 may include historical network data 317 and network data 319. Historical network data 317 may include time-series network data of features indicating network connectivity of devices at a site (e.g., statistics, metrics, or other messages associated with network connectivity of client devices 148A and AP device 142A of site 102A) that have been collected through typical operation of the network devices. For example, historical network data 317 may include time-series network data for a first feature indicating a count of client devices connected to each AP device at a site which may be used to determine a second feature of active AP devices based on which AP devices are reporting network data. Network data 319 may include real-time, time-series network data of the features reported by the AP devices within an observed time window for comparison to predicted feature values for the features as described herein.

RRM engine 360 monitors one or more metrics for each site 102A-102N in order to learn and optimize the RF environment at each site. For example, RRM engine 360 may monitor the coverage and capacity SLE metrics for a wireless network 106 at a site 102 in order to identify potential issues with SLE coverage and/or capacity in the wireless network 106 and to make adjustments to the radio settings of the access points at each site to address the identified issues. For example, RRM engine may determine channel and transmit power distribution across all APs 142 in each network 106A-106N. For example, RRM engine 360 may monitor events, power, channel, bandwidth, and number of clients connected to each AP. RRM engine 360 may further automatically change or update configurations of one or more APs 142 at a site 102 with an aim to improve the coverage and capacity SLE metrics and thus to provide an improved wireless experience for the user.

VNA/AI engine 350 analyzes data received from network devices as well as its own data to identify when undesired to abnormal states are encountered at one of the network devices. For example, VNA/AI engine 350 may identify the root cause of any undesired or abnormal states, e.g., any poor SLE metric(s) indicative of connected issues at one or more network devices. In addition, VNA/AI engine 350 may automatically invoke one or more corrective actions intended to address the identified root cause(s) of one or more poor SLE metrics. Examples of corrective actions that may be automatically invoked by VNA/AI engine 350 may include, but are not limited to, invoking RRM 360 to reboot one or more APs, adjusting/modifying the transmit power of a specific radio in a specific AP, adding SSID configuration to a specific AP, changing channels on an AP or a set of APs, etc. The corrective actions may further include restarting a switch and/or a router, invoking downloading of new software to an AP, switch, or router, etc. These corrective actions are given for example purposes only, and the disclosure is not limited in this respect. If automatic corrective actions are not available or do not adequately resolve the root cause, VNA/AI engine 350 may proactively provide a notification including recommended corrective actions to be taken by IT personnel, e.g., a site or network administrator using admin device 111, to address the network error.

In accordance with one or more techniques of this disclosure, VNA/AI engine 350 may efficiently detect anomalies associated with network data 319. AD and RCA module 335 of VNA/AI engine 350 may process features of network data 319 collected within a time window to identify a seasonal pattern for the features of network data 319. For example, AD and RCA module 335 may aggregate portions (e.g., 10 minute buckets) of time-series feature values of features of network data 319 collected during the time window indicating time intervals up to a current time. AD and RCA module 335 may identify a seasonal pattern based on the aggregated time-series features values of the features of network data 319. AD and RCA module 335 may send AD model manager 336 an indication of the identified seasonal pattern of the features of network data 319 collected within the time window.

Model selector 352 of AD model manager 336 may select a version of an anomaly detection model from model repository 380 based on the indication of the real-time seasonal pattern of the features of network data 319 collected during the time window. Model selector 352 may select a version of an anomaly detection model by assigning a seasonal pattern cluster of model repository 380 to the real-time seasonal pattern of the features of network data 319. AD model manager 336 may generate seasonal pattern clusters that each correspond to a pattern type that may be observed for a set of features included in historical network data 317. AD model manager 336 may generate a first seasonal pattern cluster that corresponds to a regular pattern type indicating the set of features follow a regular pattern with a consistent distribution (e.g., normal distribution, t-distribution, linear distribution, etc.) of features values within a time window. AD model manager 336 may generate a second seasonal pattern cluster that corresponds to a first complex pattern type indicating the set of features follow a first particular distribution of feature values within a time window. AD model manager 336 may generate a third seasonal pattern cluster that corresponds to a second complex pattern type indicating the set of features follow a second particular distribution of feature values within a time window. AD model manager 336 may assign anomaly detection models configured to predict feature values according to particular pattern types to corresponding seasonal pattern clusters associated with the particular pattern types. AD model manager 336 may store mappings of seasonal pattern clusters for pattern types to corresponding anomaly detection models at model repository 380.

Model selector 352 may select a version of an anomaly detection model according to the version of the anomaly detection model mapped to a seasonal pattern cluster assigned to an identified real-time seasonal pattern of network data 319. Model selector 352 may assign the real-time seasonal pattern to a seasonal pattern cluster stored at model repository 380 by clustering (e.g., K-means clustering) or mapping the real-time seasonal pattern to the seasonal pattern clusters of model repository 380. For example, model selector 352 may assign the real-time seasonal pattern to a seasonal pattern cluster based on determining the real-time seasonal pattern is similar to a particular pattern type that corresponds to the seasonal pattern cluster (e.g., the seasonal pattern cluster corresponds to a distribution with similar behavior to the real-time seasonal pattern). Model selector 352 may select a version of an anomaly detection model mapped to the assigned seasonal pattern cluster that is configured to predict feature values for features of network data 319 exhibiting the pattern type associated with the real-time seasonal pattern.

Model selector 352 may send AD and RCA module 335 an instance of the selected anomaly detection model. AD and RCA module 335 may execute the instance of the selected anomaly detection model to predict feature values for the time window of observed features of network data 319. AD and RCA module 335 may determine an anomaly for features of network data 319 based on a comparison of predicted feature values of the features within the time window and actual feature values of the features of network data 319 collected during the time window.

Prior to the inference phase of VNA/AI Engine 350 determining an anomaly at a site, during a training period, AD model manager 336 may monitor seasonal patterns for features of network data 316 collected at network sites associated with an organization. AD model manager 336 may generate, based on the monitored seasonal patterns and historical network data 317, versions of an anomaly detection model to store at model repository 380. AD model manager 336 may generate a threshold anomaly detection model as an anomaly detection algorithm that may implement rules and heuristics to predict feature values based on pattern types assigned to features of a site. For instance, AD model manager 336 may generate the threshold anomaly detection model during initialization of the techniques described herein to predict feature values for anomaly detection.

As NMS 300 stores additional network data at historical network data 317 indicating features for multiple sites, AD model manager 336 may generate additional anomaly detection models to adapt to trends observed in historical network data 317. For example, AD model manager 336 may generate a baseline anomaly detection model as a neural network trained to predict feature values associated with features observed to have a regular pattern type indicating consistent behavior (e.g., a normal distribution function, a t-distribution function, a linear function, etc.). AD model manager may additionally or alternatively generate, based on historical network data 317, a universal anomaly detection model that may be used to predict feature values associated with features observed at multiple sites having a particular pattern type indicating a consistent behavior shared by the multiple sites. Model selector 352 may select the baseline anomaly detection model in instances where features collected at a site indicate a regular pattern type to conserve computational resources associated with executing the slightly more complex universal anomaly detection model.

Fine-tuning module 354 of AD model manager 336 may retrain and/or fine-tune a baseline anomaly detection model to adapt to complex seasonal patterns specific to a site. For example, based on historical network data 317 having a sufficient amount of feature data (e.g., three weeks of feature data), fine-tuning module 354 may fine-tune the baseline anomaly detection model to predict feature values for features associated with complex pattern types that may have been observed at a particular site. Fine-tuning module 354 may train, based on historical network data 317, a version of an anomaly detection model as a deep learning model (e.g., a transformer model) to predict feature values for the set of features of historical network data 317 that have been identified as having the complex pattern type. Fine-tuning module 354 may assign the deep learning model to a seasonal pattern cluster associated with the complex seasonal pattern. Fine-tuning module 354 may store the deep learning anomaly detection model, as well as a mapping of the deep learning anomaly detection model to the seasonal pattern cluster, at model repository 380. Model selector 352 may select the fine-tuned anomaly detection model in instances where model selector 352 receives an indication that features at a site are observed to follow a seasonal pattern associated with the complex pattern type mapped to the fine-tuned anomaly detection model. Model selector 352 may select the baseline anomaly detection model in instances where the features of the site are observed to follow a seasonal pattern associated with a regular pattern type; thereby conserving computational resources associated with executing the fine-tuned anomaly detection model.

AD model manager 336 may store, at model repository 380, a mapping of seasonal pattern clusters associated with corresponding pattern types to versions of anomaly detection models. For example, model repository 380 may maintain a first mapping of a seasonal pattern cluster associated with random pattern type to a threshold anomaly detection model for features exhibiting a seasonal pattern associated with the random pattern. Model repository 380 may maintain a second mapping of a seasonal pattern cluster associated with a regular pattern type to a baseline anomaly detection model for features exhibiting a seasonal pattern associated with the regular pattern. Model repository 380 may maintain a third mapping of a seasonal pattern cluster associated with a complex pattern type to a fine-tuned anomaly detection model for features exhibiting a seasonal pattern associated with the complex pattern.

In some examples, anomaly detection models stored in model repository 380 may comprise one or more supervised ML models that are trained, using historical network data 317 as training data comprising pre-collected, labeled network data received from network devices (e.g., client devices, APs, switches and/or other network nodes), to identify statistical patterns of feature metrics of network data for generating predictions for anomaly detection. The supervised ML models of the anomaly detection models may comprise one of an LSTM model, a neural network, a logistical regression, naive Bayesian, support vector machine (SVM), or the like. In other examples, the anomaly detection models of model repository 380 may comprise an unsupervised ML model. anomaly detection models of model repository 380 may be trained in batches or periodically. For example, fine-tuning module 354 may retrain or otherwise fine-tune anomaly detection models of model repository 380 after new feature data is stored at historical network data 317 (e.g., new historical network collected within the last week). Although not shown in FIG. 3, in some examples, database 318 may store the training data and VNA/AI engine 350 or a dedicated training module may be configured to train anomaly detection models based on the training data to determine appropriate weights across the one or more features of the training data.

Model selector 352 may assign an anomaly detection model of model repository 380 to a site based on a real-time seasonal pattern at the site. For example, model selector 352 may, during a training period, monitor a real-time seasonal pattern for features of network data 319 collected at a site. Model selector 352 may assign the site to a seasonal pattern cluster associated with a pattern type of model repository 380 based on the real-time seasonal pattern of features of network data 319 collected at the site. For instance, model selector 352 may compare the real-time seasonal pattern of the site to respective pattern types associated with the seasonal pattern clusters maintained by model repository 380. Model selector 352 may select the anomaly detection model mapped to the assigned pattern type. AD model manager 336 may, during a training period, change assignments of seasonal pattern clusters to sites based on a subsequent, real-time network data of features indicating a different seasonal pattern. AD model manager 336 may keep the assignment of the site to the seasonal pattern cluster static after the training period. In this way, AD model manager 336 will not have to continuously select anomaly detection models until a training period is triggered (e.g., every week, every month, etc.); thus, conserving computational resources associated with iteratively assigning and selecting anomaly detection models.

AD and RCA module 335 may detect an anomaly based on the version of the anomaly detection model selected by model selector 352. For example, in instances where AD and RCA module 335 executes an instance of a baseline anomaly detection model to predict feature values for a set of features of real-time network data 319 collected during a time window (e.g., in instances where the set of features of real-time network data 319 is identified as a seasonal pattern following a regular pattern type of a t-distribution), AD and RCA module 335 may detect an anomaly based on a mean of predicted feature values for the set of features to a mean of actual feature values for the set of features. AD and RCA module 335 may detect an anomaly based on a determination that the mean of predicted features values within the time window is different by a threshold amount compared to the mean of actual feature values within the time window. In some instances, AD and RCA module 335 may detect an anomaly based on the actual feature values collected during the time window being greater than one or more standard deviations (e.g., 2.5 standard deviations) than the predicted feature values for the time window. In some examples, in instances where AD and RCA module 335 executes an instance of a fine-tuned anomaly detection module to predict feature values for a set of features of network data 319 collected during a time window (e.g., instances where the set of features of network data 319 is identified as a seasonal pattern following a complex pattern type), AD and RCA module 335 may detect an anomaly based a standard deviation or quantile associated with a comparison of the predicted feature values to the actual feature values within the time window.

In one implementation, AD and RCA module 335 may detect an anomaly at a site associated with client device drops at a site. For example, AD and RCA module 335 may identify a seasonal pattern of device counts indicated in network data 319 as a seasonal pattern of a number of client devices at the site and a number of AP devices reporting statistics at the site. AD and RCA module 335 may send AD model manager 336 and indication of the identified seasonal pattern of device counts. Model selector 352 of AD model manager 336 may select an anomaly detection model based on the identified seasonal pattern of device counts. Model selector 352 may send AD and RCA module 335 an instance of the selected anomaly detection model. AD and RCA module 335 may execute the instance of the selected anomaly detection model to predict device counts for a time window (e.g., 1 day) as an expected number of active client devices and active AP devices at a site throughout the time window. AD and RCA module 335 may detect an anomaly of client device drops during the time window based on a difference of actual device counts indicated in network data 319 and the predicted device counts output by the selected anomaly detection model.

AD and RCA module 335 may determine a root cause for the detected anomaly. AD and RCA module 335 may analyze feature data of network data 319 to determine whether one of the features in the feature data is a root cause for the detected anomaly. In some examples, AD and RCA module 335 may determine the scope of the root cause for the anomaly is at an organizational level in instances where AD and RCA module 135 determine the anomaly is detected at more than one site owned by an organization. AD and RCA module 335 may generate a recommendation on how to resolve and/or mitigate the determined root cause. AD and RCA module 335 may output the recommendation via user interface 310.

The techniques of this disclosure provide one or more technical advantages and practical applications. For example, NMS 300 may detect an anomaly associated with real-time network data 319. NMS 300 may maintain various versions of anomaly detection models that are configured to predict feature values for features that correspond to a particular seasonal pattern. NMS 300 may cluster feature data of real-time network data 319 for network sites into seasonal pattern clusters to determine an appropriate version of an anomaly detection model to apply during anomaly detection. By maintaining anomaly detection models that are trained to predict feature values that follow a particular seasonal pattern, NMS 300 may execute particular versions of anomaly detection models to optimize computational resources utilized for anomaly detection. NMS 300 may update anomaly detection models based on feature data specific to sites by fine-tuning or retraining a baseline anomaly detection model or a universal anomaly detection model to predict feature values for a feature that is specific to the sites. In this way, NMS 300 may detect anomalies that are specific to a site and generate a recommendation to resolve or mitigate a determined root cause for the detected anomaly.

Although the techniques of the present disclosure are described in this example as performed by NMS 130, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 130, or may be distributed throughout network 100, and may or may not form a part of NMS 130.

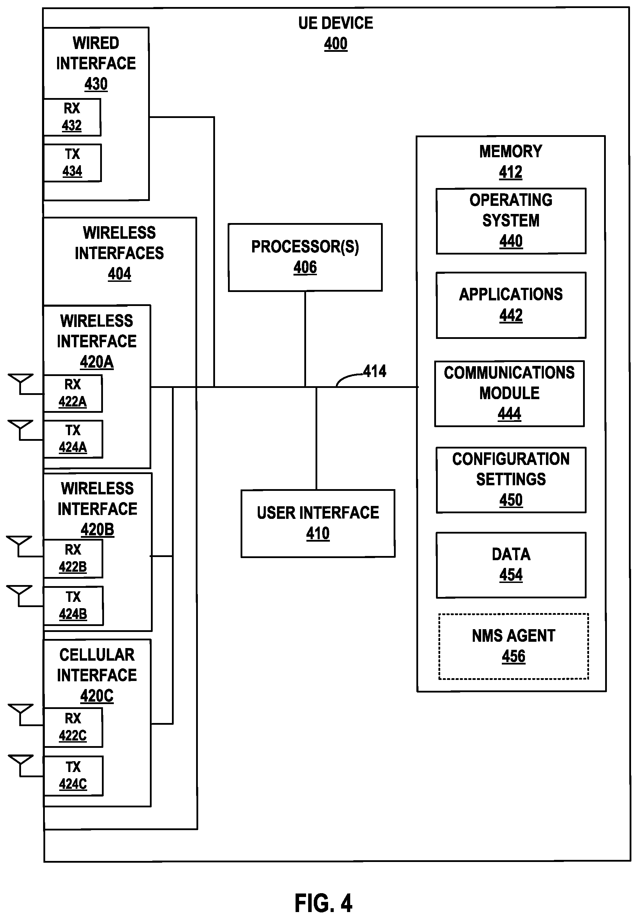

FIG. 4 shows an example user equipment (UE) device 400, in accordance with one or more techniques of this disclosure. Example UE device 400 shown in FIG. 4 may be used to implement any of UEs 148 as shown and described herein with respect to FIG. 1A. UE device 400 may include any type of wireless client device, and the disclosure is not limited in this respect. For example, UE device 400 may include a mobile device such as a smart phone, tablet or laptop computer, a personal digital assistant (PDA), a wireless terminal, a smart watch, a smart ring, or any other type of mobile or wearable device. In some examples, UE 400 may also include a wired client-side device, e.g., an IoT device such as a printer, a security sensor or device, an environmental sensor, or any other device connected to the wired network and configured to communicate over one or more wireless networks.

UE device 400 includes a wired interface 430, wireless interfaces 420A-420C, one or more processor(s) 406, memory 412, and a user interface 410. The various elements are coupled together via a bus 414 over which the various elements may exchange data and information. Wired interface 430 represents a physical network interface and includes a receiver 432 and a transmitter 434. Wired interface 430 may be used, if desired, to couple, either directly or indirectly, UE 400 to a wired network device, such as one of switches 146 of FIG. 1A, within the wired network via a cable, such as one of Ethernet cables 144 of FIG. 1A.

First, second and third wireless interfaces 420A, 420B, and 420C include receivers 422A, 422B, and 422C, respectively, each including a receive antenna via which UE 400 may receive wireless signals from wireless communications devices, such as APs 142 of FIG. 1A, AP 200 of FIG. 2, other UEs 148, or other devices configured for wireless communication. First, second, and third wireless interfaces 420A, 420B, and 420C further include transmitters 424A, 424B, and 424C, respectively, each including transmit antennas via which UE 400 may transmit wireless signals to wireless communications devices, such as APs 142 of FIG. 1A, AP 200 of FIG. 2, other UEs 148 and/or other devices configured for wireless communication. In some examples, first wireless interface 420A may include a Wi-Fi 802.11 interface (e.g., 2.4 GHz and/or 5 GHz) and second wireless interface 420B may include a Bluetooth interface and/or a Bluetooth Low Energy interface. Third wireless interface 420C may include, for example, a cellular interface through which UE device 400 may connect to a cellular network.

Processor(s) 406 execute software instructions, such as those used to define a software or computer program, stored to a computer-readable storage medium (such as memory 412), such as non-transitory computer-readable mediums including a storage device (e.g., a disk drive, or an optical drive) or a memory (such as Flash memory or RAM) or any other type of volatile or non-volatile memory, that stores instructions to cause the one or more processors 406 to perform the techniques described herein. Such software instructions may also or alternatively be received by the processor(s) 406 for execution by way of a computer readable transmission medium (such as wired interface 430, wireless interface 420A, 420B, 420C, 404 and/or bus 414).

Memory 412 includes one or more devices configured to store programming modules and/or data associated with operation of UE 400. For example, memory 412 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the one or more processor(s) 406 to perform the techniques described herein.

In this example, memory 412 includes an operating system 440, applications 442, a communications module 444, configuration settings 450, and data storage 454. Communications module 444 includes program code that, when executed by processor(s) 406, enables UE 400 to communicate using any of wired interface(s) 430, wireless interfaces 420A-420B and/or cellular interface 450C. Configuration settings 450 include any device settings for UE 400 settings for each of wireless interface(s) 420A-420B and/or cellular interface 420C.

Data storage 454 may include, for example, a status/error log including a list of events specific to UE 400. The events may include a log of both normal events and error events according to a logging level based on instructions from NMS 130. Data storage 454 may store any data used and/or generated by UE 400, such as data used to calculate one or more SLE metrics or identify relevant behavior data, that is collected by UE 400 and either transmitted directly to NMS 130 or transmitted to any of APs 142 in a wireless network 106 for further transmission to NMS 130.

As described herein, UE 400 may measure and report network data from data storage 454 to NMS 130. The network data may comprise event data, telemetry data, and/or other SLE-related data. The network data may include various parameters indicative of the performance and/or status of the wireless network. NMS 130 may determine one or more SLE metrics and store the SLE metrics as network data 137 (FIG. 1A) based on the SLE-related data received from the UEs or client devices in the wireless network.

Optionally, UE device 400 may include an NMS agent 456. NMS agent 456 is a software agent of NMS 130 that is installed on UE 400. In some examples, NMS agent 456 can be implemented as a software application running on UE 400. NMS agent 456 collects information including detailed client-device properties from UE 400, including insight into UE 400 roaming behaviors. The information provides insight into client roaming algorithms, because roaming is a client device decision. In some examples, NMS agent 456 may display the client-device properties on UE 400. NMS agent 456 sends the client device properties to NMS 130, via an AP device to which UE 400 is connected. NMS agent 456 can be integrated into a custom application or as part of location application. NMS agent 456 may be configured to recognize device connection types (e.g., cellular or Wi-Fi), along with the corresponding signal strength. For example, NMS agent 456 recognizes access point connections and their corresponding signal strengths. NMS agent 456 can store information specifying the APs recognized by UE 400 as well as their corresponding signal strengths. NMS agent 456 or other element of UE 400 also collects information about which APs the UE 400 connected with, which also indicates which APs the UE 400 did not connect with. NMS agent 456 of UE 400 sends this information to NMS 130 via its connected AP. In this manner, UE 400 sends information about not only the AP that UE 400 connected with, but also information about other APs that UE 400 recognized and did not connect with, and their signal strengths. The AP in turn forwards this information to the NMS, including the information about other APs the UE 400 recognized besides itself. This additional level of granularity enables NMS 130, and ultimately network administrators, to better determine the Wi-Fi experience directly from the client device's perspective.

In some examples, NMS agent 456 further enriches the client device data leveraged in service levels. For example, NMS agent 456 may go beyond basic fingerprinting to provide supplemental details into properties such as device type, manufacturer, and different versions of operating systems. In the detailed client properties, the NMS 130 can display the Radio Hardware and Firmware information of UE 400 received from NMS client agent 456. The more details the NMS agent 456 can draw out, the better the VNA/AI engine gets at advanced device classification. The VNA/AI engine of the NMS 130 continually learns and becomes more accurate in its ability to distinguish between device-specific issues or broad device issues, such as specifically identifying that a particular OS version is affecting certain clients.

In some examples, NMS agent 456 may cause user interface 410 to display a prompt that prompts an end user of UE 400 to enable location permissions before NMS agent 456 is able to report the device's location, client information, and network connection data to the NMS. NMS agent 456 will then start reporting connection data to the NMS along with location data. In this manner, the end user of the client device can control whether the NMS agent 456 is enabled to report client device information to the NMS.

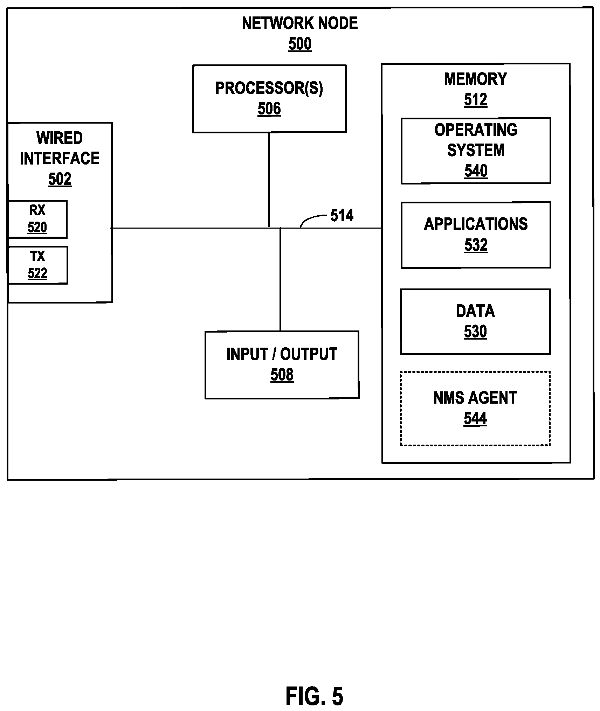

FIG. 5 is a block diagram illustrating an example network node 500, in accordance with one or more techniques of this disclosure. In one or more examples, the network node 500 implements a device or a server attached to the network 134 of FIG.1A, e.g., switches 146, AAA server 110, DHCP server 116, DNS server 122, web servers 128, etc., or another network device supporting one or more of wireless network 106, wired LAN 175, or SD-WAN 177, or data center 179 of FIG. 1B, e.g., routers 187.

In this example, network node 500 includes a wired interface 502, e.g., an Ethernet interface, a processor 506, input/output 508, e.g., display, buttons, keyboard, keypad, touch screen, mouse, etc., and a memory 512 coupled together via a bus 514 over which the various elements may interchange data and information. Wired interface 502 couples the network node 500 to a network, such as an enterprise network. Though only one interface is shown by way of example, network nodes may, and usually do, have multiple communication interfaces and/or multiple communication interface ports. Wired interface 502 includes a receiver 520 and a transmitter 522.

Memory 512 stores executable software applications 532, operating system 540 and data/information 530. Data 530 may include a system log and/or an error log that stores event data, including behavior data, for network node 500. In examples where network node 500 comprises a "third-party" network device, the same entity does not own or have access to both the APs or wired client-side devices and network node 500. As such, in the example where network node 500 is a third-party network device, NMS 130 does not receive, collect, or otherwise have access to the network data from network node 500.

In examples where network node 500 comprises a server, network node 500 may receive data and information, e.g., including operation related information, e.g., registration request, AAA services, DHCP requests, Simple Notification Service (SNS) look-ups, and Web page requests via receiver 520, and send data and information, e.g., including configuration information, authentication information, web page data, etc. via transmitter 522.

In examples where network node 500 comprises a wired network device, network node 500 may be connected via wired interface 502 to one or more APs or other wired client-side devices, e.g., IoT devices. For example, network node 500 may include multiple wired interfaces 502 and/or wired interface 502 may include multiple physical ports to connect to multiple APs or the other wired-client-side devices within a site via respective Ethernet cables. In some examples, each of the APs or other wired client-side devices connected to network node 500 may access the wired network via wired interface 502 of network node 500. In some examples, one or more of the APs or other wired client-side devices connected to network node 500 may each draw power from network node 500 via the respective Ethernet cable and a Power over Ethernet (PoE) port of wired interface 502.

In examples where network node 500 comprises a session-based router that employs a stateful, session-based routing scheme, network node 500 may be configured to independently perform path selection and traffic engineering. The use of session-based routing may enable network node 500 to eschew the use of a centralized controller, such as an SDN controller, to perform path selection and traffic engineering, and eschew the use of tunnels. In some examples, network node 500 may implement session-based routing as Secure Vector Routing (SVR), provided by Juniper Networks, Inc. In the case where network node 500 comprises a session-based router operating as a network gateway for a site of an enterprise network (e.g., router 187A of FIG. 1B), network node 500 may establish multiple peer paths (e.g., logical path 189 of FIG. 1B) over an underlying physical WAN (e.g., SD-WAN 177 of FIG. 1B) with one or more other session-based routers operating as network gateways for other sites of the enterprise network (e.g., router 187B of FIG. 1B). Network node 500, operating as a session-based router, may collect data at a peer path level, and report the peer path data to NMS 130.

In examples where network node 500 comprises a packet-based router, network node 500 may employ a packet- or flow-based routing scheme to forward packets according to defined network paths, e.g., established by a centralized controller that performs path selection and traffic engineering. In the case where network node 500 comprises a packet-based router operating as a network gateway for a site of an enterprise network (e.g., router 187A of FIG. 1B), network node 500 may establish multiple tunnels (e.g., logical path 189 of FIG. 1B) over an underlying physical WAN (e.g., SD-WAN 177 of FIG. 1B) with one or more other packet-based routers operating as network gateways for other sites of the enterprise network (e.g., router 187B of FIG. 1B). Network node 500, operating as a packet-based router, may collect data at a tunnel level, and the tunnel data may be retrieved by NMS 130 via an API or an open configuration protocol or the tunnel data may be reported to NMS 130 by NMS agent 544 or other module running on network node 500.

The data collected and reported by network node 500 may include periodically-reported data and event-driven data. Network node 500 is configured to collect logical path statistics via bidirectional forwarding detection (BFD) probing and data extracted from messages and/or counters at the logical path (e.g., peer path or tunnel) level. In some examples, network node 500 is configured to collect statistics and/or sample other data according to a first periodic interval, e.g., every 3 seconds, every 5 seconds, etc. Network node 500 may store the collected and sampled data as path data, e.g., in a buffer.

In some examples, network node 500 optionally includes an NMS agent 544. NMS agent 544 may periodically create a package of the statistical data according to a second periodic interval, e.g., every 3 minutes. The collected and sampled data periodically-reported in the package of statistical data may be referred to herein as "oc-stats." In some examples, the package of statistical data may also include details about clients connected to network node 500 and the associated client sessions. NMS agent 544 may then report the package of statistical data to NMS 130 in the cloud. In other examples, NMS 130 may request, retrieve, or otherwise receive the package of statistical data from network node 500 via an API, an open configuration protocol, or another of communication protocols. The package of statistical data created by NMS agent 544 or another module of network node 500 may include a header identifying network node 500 and the statistics and data samples for each of the logical paths from network node 500. In still other examples, NMS agent 544 reports event data to NMS 130 in the cloud in response to the occurrence of certain events at network node 500 as the events happen. The event-driven data may be referred to herein as "oc-events."

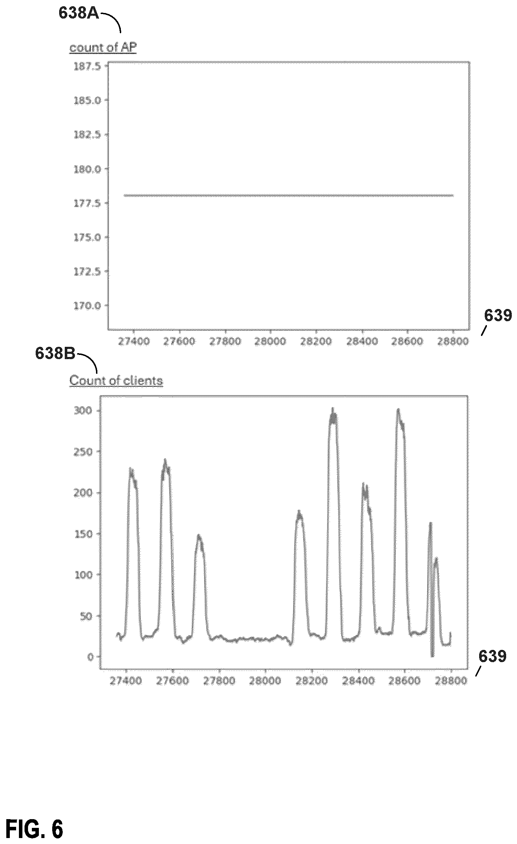

FIG. 6 illustrates example features 638A, 638B of network data collected within an example time window 639, in accordance with one or more techniques of this disclosure. FIG. 6 may be discussed with respect to FIG. 1A for example purposes only.

NMS 130 may collect network data 137 to include feature values for features 638A, 638B within time window 639. In the example of FIG. 6, NMS 130 may collect feature values for feature 638A that indicate a count of APs 142A that are reporting, to NMS 130, statistics for site 102A within time window 639 that defines a time between time stamp 27400 and time stamp 28800. NMS 130 may collect feature values for feature 638B that indicate a count of client devices 148A that are connected to active APs 142A at site 102A within time window 639 that defines a time between time stamp 27400 and time stamp 28800.

NMS 130, or more specifically AD and RCA module 135, may identify seasonal patterns for features 638A, 638B collected within time window 639. For example, AD and RCA module 135 may identify a seasonal pattern for features 638A, 638B to be a complex pattern type that follows a stable, consistent statistical behavior. In the example of FIG. 6, the seasonal pattern for features 638, 638B is a consistent statistical behavior. The consistent statistical behavior of feature 638A may be a linear function within time window 639. The consistent statistical behavior of feature 638B may be a complex distribution of a sequence of normal distributions distributed at particular portions of time window 639. AD and RCA module 135 may send an indication to AD model manager 136 that the seasonal pattern of features 638A, 638B is assigned to a complex pattern type that may be specific to one or more sites of sites 102 within time window 639.

AD model manager 136 may, based on the indication of the seasonal pattern for features 638A, 638B, select a universal or fine-tuned anomaly detection model to predict expected feature values for features 638A, 638B for time window 639. For example, AD model manager 136 may select a universal anomaly detection model based on the seasonal pattern identified for features 638A, 638B being assigned to a complex pattern type of a seasonal pattern cluster mapped to the universal anomaly detection model. AD model manager 136 may assign the site associated with features 638A, 638B to the universal anomaly detection model in instances where more than one site of sites 102 have features that follow a similar pattern type as illustrated in FIG. 6. In another example, AD model manager 136 may select a fine-tuned anomaly detection model to predict expected features values for features 638A, 638B based on the site associated with features 638A, 638B being assigned to the complex pattern type of a seasonal pattern cluster mapped to the fine-tuned anomaly detection model trained specifically for the site.

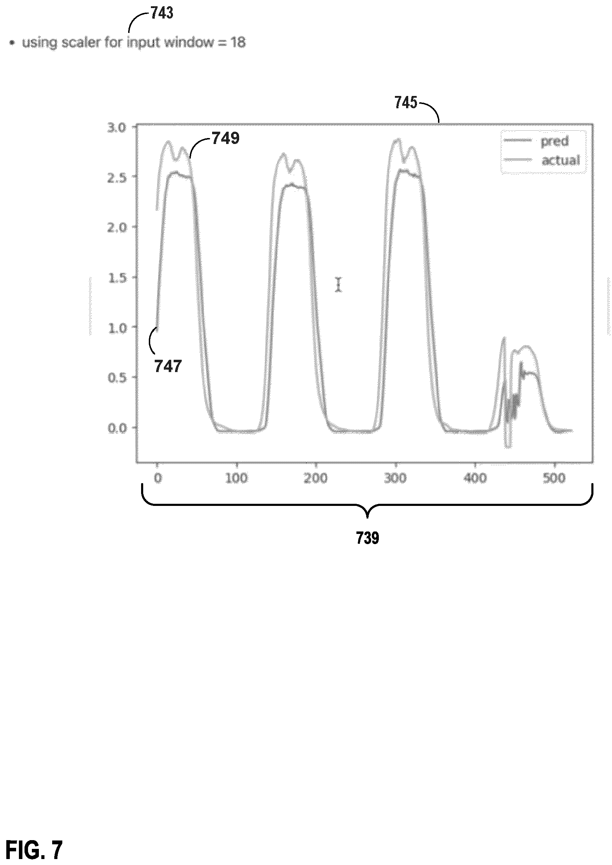

AD model manager 136 may send AD and RCA module 135 an instance of the selected anomaly detection model to predict feature values for features 638A, 638B. AD and RCA module 135 may execute the instance of the selected anomaly detection model to detect anomalies, as described in more detail in FIG. 7. AD model manager 136 may refresh the assignment of site 102A to the seasonal pattern cluster based on subsequent network data indicating a different seasonal pattern. AD model manager 136 may send AD and RCA module 135 a different anomaly detection model based on the different seasonal pattern. In this way, NMS 130 may detect anomalies at sites based on particular seasonal patterns of features observed at sites 102.

FIG. 7 illustrates example comparison 745 of actual feature values 749 for features to predicted feature values 747 for the features for anomaly detection, in accordance with one or more techniques of this disclosure. FIG. 7 may be described with respect to FIG. 1A for example purposes only.

NMS 130 may detect an anomaly based on a comparison of predicted feature values 747 for features (e.g., features 638A, 638B of FIG. 6) to actual feature values 749 for the features. For example, NMS 130 may detect an anomaly for a site based on actual feature values 749 for the features collected at the site and predicted feature values 747 for the features. NMS 130, or more specifically AD and RCA module 135, may execute an instance of a selected anomaly detection model trained to output predicted feature values 747 for the features. For example, AD and RCA module 135 may execute an instance of an anomaly detection model trained to generate predicted feature values 747 based on historical network data indicating historical features values that follow a similar pattern type as actual feature values 749.

AD and RCA module 135 may execute the instance of the anomaly detection model to generate predicted feature values 747. AD and RCA module 135 may generate predicted feature values 747 that include expected feature values for the features within time window 739. AD and RCA module 135 may generate comparison 745 that compares actual feature values 749 of the features collected within time window 739 to predicted feature values 747 of the features within time window 739. AD and RCA module 135 may generate comparison 745 according to time interval definition 743. In the example of FIG. 7, AD and RCA module 135 may apply time interval definition 743 specifying a scalar input window of 18 data points. AD and RCA module 135 may apply time interval definition 743 to aggregate features of network data 137 to generate comparison 745. For example, AD and RCA module 135 may apply time interval definition 743 to generate actual feature values 749 illustrated in FIG. 7 by aggregating 18 data points of network data 137 to create a feature value with respect to a time specified in time window 739.

AD and RCA module 135 may detect an anomaly within time window 739 based on a comparison of predicted feature values 747 and actual feature values 749. For example, AD and RCA module 135 may determine a difference between predicted feature values 747 for time window 739 and actual feature values 749 for time window 739. In the example of FIG. 7, AD and RCA module 135 may determine the difference between predicted feature values 747 for time window 739 and actual feature values 749 within time window 739 satisfies an anomaly detection threshold. For example, AD and RCA module 135 may determine the difference between predicted feature values 747 for time window 739 at timestamps between 400 and 500 and actual feature values 749 for time window 739 at timestamps between 400 and 500 satisfies the anomaly detection threshold by determining actual feature values 749 collected within timestamps 400 and 500 are different than predicted feature values 747 for timestamps 400 and 500 by at least two standard deviations. AD and RCA module 135 may conduct root cause analysis using network data 137 to determine a root cause of the detected anomaly. AD and RCA module 135 may generate and output, based on the determined root cause, a recommendation to administrator suggesting adjustments that may mitigate and/or resolve the detected anomaly.

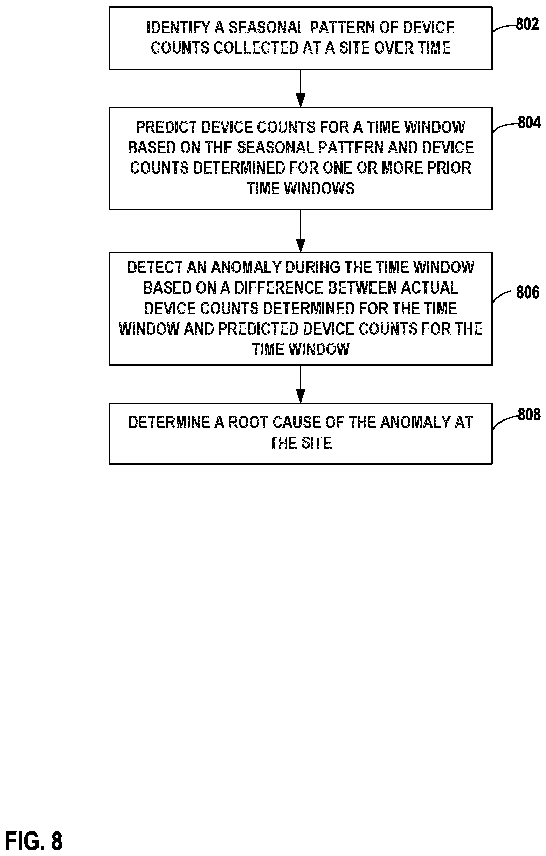

FIG. 8 is a flow chart illustrating an example operation for detecting anomalies, in accordance with one or more techniques of this disclosure. FIG. 8 may be discussed with respect to FIG. 1A for example purposes only.

NMS 130 may identify a seasonal pattern of device counts collected at a site over time (802). NMS 130 may predict device counts for a time window based on the seasonal pattern and device counts determined for one or more prior time windows (804). NMS 130 may detect an anomaly during the time window based on a difference between actual device counts determined for the time window and predicted device counts for the time window (806). NMS 130 may determine a root cause of the anomaly at the site (808).

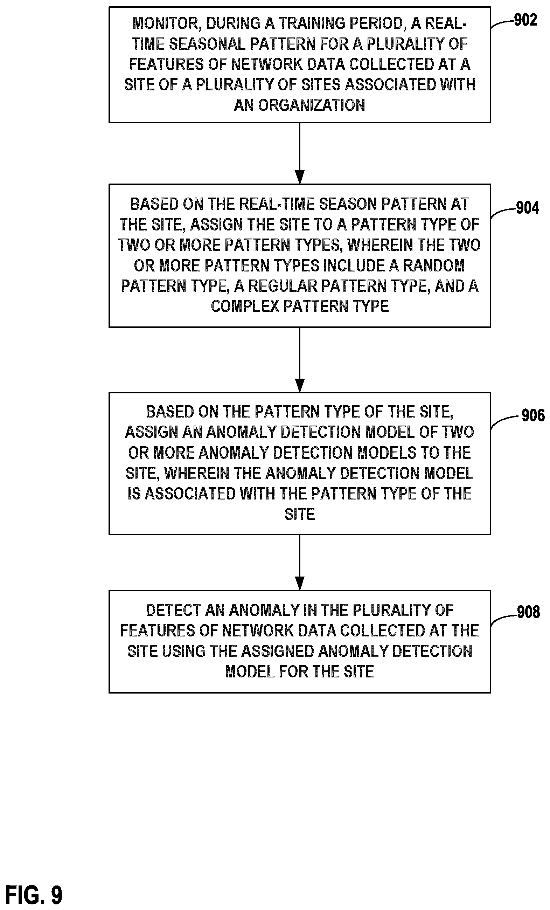

FIG. 9 is a flow chart illustrating an example operation for selecting an anomaly detection model for detecting anomalies, in accordance with one or more techniques of this disclosure. FIG. 9 may be discussed with respect to FIG. 1A for example purposes only.

NMS 130 may monitor, during a training period, a real-time seasonal pattern for a plurality of features of network data (e.g., network data 137) collected at a site (e.g., site 102A) of a plurality of sites (e.g., sites 102) associated with an organization (902). Based on the real-time seasonal pattern at the site, NMS 130 may assign the site to a pattern type of two or more pattern types, wherein the two or more pattern types include a random pattern type, a regular pattern type, and a complex pattern type (904). Based on the pattern type of the site, NMS 130 may assign an anomaly detection model to two or more anomaly detection models to the site, wherein the anomaly detection model is associated with the pattern type of the site (906). NMS 130 may detect an anomaly in the plurality of features of network data collected at the site using the assigned anomaly detection model for the site (908).

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively or additionally, if implemented in software or firmware, the techniques may be realized at least in part by a computer-readable medium comprising instructions that, when executed, cause a processor to perform one or more of the methods described above. For example, the computer-readable medium may be provided as a computer readable data storage medium which can store such instructions for execution by a processor. The computer-readable medium may also or alternatively be provided as a computer readable sata transmission medium which can store convey instructions for execution by a processor

A computer-readable medium may form part of a computer program product, which may include packaging materials. A computer-readable medium may comprise a computer data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

A computer readable medium may comprise a computer readable data transmission medium, such as a carrier wave, transmission signal, or the like. A computer-readable transmission medium may convey instructions between components of a single computer system and/or between plural separate computer systems.

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Therefore, from one perspective, there have been described techniques for identifying, by a network management system (NMS), a seasonal pattern of device counts collected at a site over time; predicting, by the NMS, device counts for a time window based on the seasonal pattern and device counts determined for one or more prior time windows; detecting, by the NMS, an anomaly during the time window based on a difference between actual device counts determined for the time window and the predicted device counts for the time window; and determining, by the NMS, a root cause of the anomaly at the site.

Further examples of feature combinations taught by the present disclosure are set out in the following numbered clauses.

Clause 1. A network management system (NMS) comprising: memory; and processing circuitry in communication with the memory and configured to: identify a seasonal pattern of device counts collected at a site over time; predict device counts for a time window based on the seasonal pattern and device counts determined for one or more prior time windows; detect an anomaly during the time window based on a difference between actual device counts determined for the time window and the predicted device counts for the time window; and determine a root cause of the anomaly at the site.

Clause 2. The NMS of clause 1, wherein the device counts include a number of active client devices at the site and a number of active access point (AP) devices at the site.

Clause 3. The NMS of clause 1 or 2, wherein to determine the root cause, the processing circuitry is configured to: detect the anomaly at each site of two or more sites associated with an organization, the two or more sites including the site; and determine the root cause of the anomaly across the two or more sites associated with the organization.

Clause 4. The NMS of clause 1, 2 or 3, wherein to detect the anomaly during the time window, the processing circuitry is configured to determine that the difference between the actual device counts for the time window and the predicted device counts for the time window is greater than two standard deviations.

Clause 5. The NMS of any preceding clause, wherein to predict the device counts for the time window, the processing circuitry is configured to: select, based on the seasonal pattern at the site, an anomaly detection model of a plurality of anomaly detection models; and predict, using the anomaly detection model, the device counts for the time window.

Clause 6. The NMS of clause 5, wherein the plurality of anomaly detection models include a threshold model associated with a random pattern type, a baseline model associated with a regular pattern type, and a fine-tuned machine learning model associated with a complex pattern type.

Clause 7. The NMS of clause 6, wherein the processing circuitry is further configured to: train, based on a first set of historical network data across two or more sites of an organization, a machine learning model to create a universal machine learning model; and fine-tune, based on a second set of historical network for the site, the universal machine learning model to create the fine-tuned machine learning model for the site.

Clause 8. The NMS of any preceding clause, wherein the network data is collected from a plurality of access point (AP) devices operating at the site.

Clause 9. A method comprising: identifying, by a network management system (NMS), a seasonal pattern of device counts collected at a site over time; predicting, by the NMS, device counts for a time window based on the seasonal pattern and device counts determined for one or more prior time windows; detecting, by the NMS, an anomaly during the time window based on a difference between actual device counts determined for the time window and the predicted device counts for the time window; and determining, by the NMS, a root cause of the anomaly at the site.

Clause 10. The method of clause 9, wherein the device counts include a number of active client devices at the site and a number of active access point (AP) devices at the site.

Clause 11. The method of clause 9 or 10, wherein determining the root cause comprises: detecting the anomaly at each site of two or more sites associated with an organization, the two or more sites including the site; and determining the root cause of the anomaly across the two or more sites associated with the organization.

Clause 12. The method of clause 9, 10 or 11, wherein detecting the anomaly during the time window comprises determining that the difference between the actual device counts for the time window and the predicted device counts for the time window is greater than two standard deviations.

Clause 13. The method of any of clauses 9 to 12, wherein predicting the device counts for the time window comprises: selecting, based on the seasonal pattern at the site, an anomaly detection model of a plurality of anomaly detection models; and predicting, using the anomaly detection model, the device counts for the time window.

Clause 14. The method of clause 13, wherein the plurality of anomaly detection models include a threshold model associated with a random pattern type, a baseline model associated with a regular pattern type, and a fine-tuned machine learning model associated with a complex pattern type.

Clause 15. The method of clause 14, further comprising: training, based on a first set of historical network data across two or more sites of an organization, a machine learning model to create a universal machine learning model; and fine-tuning, based on a second set of historical network for the site, the universal machine learning model to create the fine-tuned machine learning model for the site.

Clause 16. The method of any of clauses 9 to 15, wherein the network data is collected from a plurality of access point (AP) devices operating at the site.

Clause 17. Computer readable media comprising instructions that, when executed by one or more programmable processors, cause the one or more programmable processors to: identify a seasonal pattern of device counts collected at a site over time; predict device counts for a time window based on the seasonal pattern and device counts determined for one or more prior time windows; detect an anomaly during the time window based on a difference between actual device counts determined for the time window and the predicted device counts for the time window; and determine a root cause of the anomaly at the site.

Clause 18. The computer readable media of clause 17, wherein the device counts include a number of active client devices at the site and a number of active access point (AP) devices at the site.

Clause 19. The computer readable media of clause 17 or 18, wherein to determine the root cause, the instructions cause the one or more programmable processors to: detect the anomaly at each site of two or more sites associated with an organization, the two or more sites including the site; and determine the root cause of the anomaly across the two or more sites associated with the organization.

Clause 20. The computer readable media of clause 17, 18 or 19, wherein to predict the device counts for the time window, the instructions cause the one or more programmable processors to: select, based on the seasonal pattern at the site, an anomaly detection model of a plurality of anomaly detection models; and predict, using the anomaly detection model, the device counts for the time window.

Clause 21. A network management system (NMS) comprising: memory; and processing circuitry in communication with the memory and configured to: identify a seasonal pattern of device counts collected at a site over time; predict device counts for a time window based on the seasonal pattern and device counts determined for one or more prior time windows; detect an anomaly during the time window based on a difference between actual device counts determined for the time window and the predicted device counts for the time window; and determine a root cause of the anomaly at the site.

Clause 22. The NMS of clause 21, wherein the device counts include a number of active client devices at the site and a number of active access point (AP) devices at the site.

Clause 23. The NMS of any of clauses 21-22, wherein to determine the root cause, the processing circuitry is configured to: detect the anomaly at each site of two or more sites associated with an organization, the two or more sites including the site; and determine the root cause of the anomaly across the two or more sites associated with the organization.

Clause 24. The NMS of any of clauses 21-23, wherein to detect the anomaly during the time window, the processing circuitry is configured to determine that the difference between the actual device counts for the time window and the predicted device counts for the time window is greater than two standard deviations.

Clause 25. The NMS of any of clauses 21-24, wherein to predict the device counts for the time window, the processing circuitry is configured to: select, based on the seasonal pattern at the site, an anomaly detection model of a plurality of anomaly detection models; and predict, using the anomaly detection model, the device counts for the time window.

Clause 26. The NMS of clause 25, wherein the plurality of anomaly detection models include a threshold model associated with a random pattern type, a baseline model associated with a regular pattern type, and a fine-tuned machine learning model associated with a complex pattern type.

Clause 27. The NMS of clause 26, wherein the processing circuitry is further configured to: train, based on a first set of historical network data across two or more sites of an organization, a machine learning model to create a universal machine learning model; and fine-tune, based on a second set of historical network for the site, the universal machine learning model to create the fine-tuned machine learning model for the site.

Clause 28. The NMS of any of clauses 21-27, wherein the network data is collected from a plurality of access point (AP) devices operating at the site.

Clause 29. A network management system (NMS) comprising: memory; and processing circuitry in communication with the memory and configured to: monitor, during a training period, a real-time seasonal pattern for a plurality of features of network data collected at a site of a plurality of sites associated with an organization; based on the real-time season pattern at the site, assign the site to a pattern type of two or more pattern types, wherein the two or more pattern types include a random pattern type, a regular pattern type, and a complex pattern type; based on the pattern type of the site, assign an anomaly detection model of two or more anomaly detection models to the site, wherein the anomaly detection model is associated with the pattern type of the site; and detect an anomaly in the plurality of features of network data collected at the site using the assigned anomaly detection model for the site.

Clause 30. The NMS of clause 29, wherein, during the training period, the pattern type and associated anomaly detection model assigned to the site changes over time based on changes in the monitored real-time seasonal pattern at the site; and wherein, after the training period, the pattern type and associated anomaly detection model assigned to the site remains static.

Clause 31. The NMS of any of clauses 29-30, wherein the two or more anomaly detection models include a threshold model associated with the random pattern type, a baseline model associated with the regular pattern type, and a fine-tuned machine learning model associated with the complex pattern type.

Clause 32. The NMS of any of clauses 29-31, wherein to identify the real-time seasonal pattern, the processing circuitry is configured to determine a distribution of the plurality of features of network data collected at the site up to a current time.

Clause 33. The NMS of any of clauses 29-32, wherein to assign the site to the pattern type, the processing circuitry is further configured to assign the site to one seasonal pattern cluster of two or more seasonal pattern clusters based on the real-time seasonal pattern at the site; and wherein to assign the anomaly detection model to the site, the processing circuitry is further configured to select, based on the one seasonal pattern cluster, the anomaly detection model from the two or more anomaly detection models.

Clause 34. The NMS of clause 33, wherein to assign the site to the one seasonal pattern cluster, the processing circuitry is further configured to compare the real-time seasonal pattern of the site to respective pattern types of the two or more seasonal pattern clusters.

Clause 35. The NMS of any of clauses 29-34, wherein the network data collected at the site is network data collected from a plurality of access point (AP) devices operating at the site.

Clause 36. A method comprising steps corresponding to functionality recited by any of clauses 21-28.

Clause 37. Computer readable media comprising instructions that, when executed by one or more programmable processors, cause the one or more programmable processors to perform the method of clause 36.

Clause 38. A method comprising steps corresponding to functionality recited by any of claims 29-35.

Clause 39. Computer readable media comprising instructions that, when executed by one or more programmable processors, cause the one or more programmable processors to perform the method of clause 38.

## Claims

1. A network management system, NMS, comprising:
memory; and
processing circuitry in communication with the memory and configured to:
identify a seasonal pattern of device counts collected at a site over time;
predict device counts for a time window based on the seasonal pattern and device counts determined for one or more prior time windows;
detect an anomaly during the time window based on a difference between actual device counts determined for the time window and the predicted device counts for the time window; and
determine a root cause of the anomaly at the site.

2. The NMS of claim 1, wherein the device counts include a number of active client devices at the site and a number of active access point, AP, devices at the site.

3. The NMS of any of claims 1-2, wherein to determine the root cause, the processing circuitry is configured to:
detect the anomaly at each site of two or more sites associated with an organization, the two or more sites including the site; and
determine the root cause of the anomaly across the two or more sites associated with the organization.

4. The NMS of any of claims 1-3, wherein to detect the anomaly during the time window, the processing circuitry is configured to determine that the difference between the actual device counts for the time window and the predicted device counts for the time window is greater than two standard deviations.

5. The NMS of any of claims 1-4, wherein to predict the device counts for the time window, the processing circuitry is configured to:
select, based on the seasonal pattern at the site, an anomaly detection model of a plurality of anomaly detection models; and
predict, using the anomaly detection model, the device counts for the time window.

6. The NMS of claim 5, wherein the plurality of anomaly detection models include a threshold model associated with a random pattern type, a baseline model associated with a regular pattern type, and a fine-tuned machine learning model associated with a complex pattern type.

7. The NMS of claim 6, wherein the processing circuitry is further configured to:
train, based on a first set of historical network data across two or more sites of an organization, a machine learning model to create a universal machine learning model; and
fine-tune, based on a second set of historical network for the site, the universal machine learning model to create the fine-tuned machine learning model for the site.

8. The NMS of any of claims 1-7, wherein the network data is collected from a plurality of access point, AP, devices operating at the site.

9. A method comprising:
identifying, by a network management system, NMS, a seasonal pattern of device counts collected at a site over time;
predicting, by the NMS, device counts for a time window based on the seasonal pattern and device counts determined for one or more prior time windows;
detecting, by the NMS, an anomaly during the time window based on a difference between actual device counts determined for the time window and the predicted device counts for the time window; and
determining, by the NMS, a root cause of the anomaly at the site.

10. The method of claim 9 further comprising steps corresponding to the functionality recited in any of claims 2-8.

11. Computer-readable media comprising instructions that, when executed by one or more programmable processors, cause the one or more programmable processors to perform the method recited by any of claims 9-10.
